(19) Europäisches Patentamt / European Patent Office / Office européen des brevets

(11) **EP 4 375 887 B1**

(12) **EUROPEAN PATENT SPECIFICATION**

(45) Date of publication and mention of the grant of the patent:
**05.08.2026 Bulletin 2026/32**

(21) Application number: **23212467.7**

(22) Date of filing: **27.11.2023**

(51) International Patent Classification (IPC):
**G06N 10/40** (2022.01)     **G06N 10/70** (2022.01)
**G06E 1/00** (2006.01)

(52) Cooperative Patent Classification (CPC):
**G06N 10/70; G06E 1/00; G06N 10/40**

(54) **GENERATION OF GOTTESMAN-KITAEV-PRESKILL (GKP) STATES BASED ON MULTI-PEAK QUANTUM STATES OF LIGHT**

ERZEUGUNG VON GOTTESMAN-KITAEV-PRESKILL (GKP)-ZUSTÄNDEN AUF BASIS VON MULTISPITZENQUANTENZUSTÄNDEN DES LICHTS

GÉNÉRATION D'ÉTATS DE PRESTIGE DE GOTTESMAN-KITAEV (GKP) SUR LA BASE D'ÉTATS QUANTIQUES DE LUMIÈRE À CRÊTES MULTIPLES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.11.2022 US 202263428189 P**

(43) Date of publication of application:
**29.05.2024 Bulletin 2024/22**

(73) Proprietor: **Xanadu Quantum Technologies Holdings ULC**
**Toronto, Ontario M5G 2C8 (CA)**

(72) Inventors:
• **ALEXANDER, Rafael N.**
**Toronto, M4W 1N2 (CA)**
• **BOURASSA, Joseph Eli**
**Toronto, M4J 1C4 (CA)**
• **HASTRUP, Jacob**
**2300 København S (DK)**
• **HILLMANN, Timo**
**417 53 Göteborg (SE)**

(74) Representative: **Cooley (UK) LLP**
**22 Bishopsgate**
**London EC2N 4BQ (GB)**

(56) References cited:
• **JACOB HASTRUP ET AL: "Generation of optical Gottesman-Kitaev-Preskil states with cavity QED", ARXIV.ORG, CORNELL UNIVERSITY LIBRARY, 201 OLIN LIBRARY CORNELL UNIVERSITY ITHACA, NY 14853, 16 April 2021 (2021-04-16), XP081939269**
• **DANIEL J WEIGAND ET AL: "Generating Grid States From Schrodinger Cat States without Post-Selection", ARXIV.ORG, CORNELL UNIVERSITY LIBRARY, 201 OLIN LIBRARY CORNELL UNIVERSITY ITHACA, NY 14853, 25 September 2017 (2017-09-25), XP081318866, DOI: 10.1103/PHYSREVA.97.022341**
• **ILAN TZITRIN ET AL: "Progress towards practical qubit computation using approximate Gottesman-Kitaev-Preskill codes", ARXIV.ORG, CORNELL UNIVERSITY LIBRARY, 201 OLIN LIBRARY CORNELL UNIVERSITY ITHACA, NY 14853, 8 October 2019 (2019-10-08), XP081622326, DOI: 10.1103/PHYSREVA.101.032315**
• **ELI BOURASSA J ET AL: "Blueprint for a Scalable Photonic Fault-Tolerant Quantum Computer", ARXIV.ORG, CORNELL UNIVERSITY LIBRARY, 201 OLIN LIBRARY CORNELL UNIVERSITY ITHACA, NY 14853, 6 October 2020 (2020-10-06), XP081779739**

EP 4 375 887 B1

**Description**

*Field*

The present disclosure is related to quantum optical circuits, and more specifically, to the generation of a plurality of Gottesman-Kitaev-Preskill (GKP) quantum states of light for use in quantum computing.

*Background*

Quantum computing is a type of computation whose operations can leverage quantum mechanical effects, such as superposition, interference, and entanglement. Devices that perform quantum computations are known as quantum computers. Most quantum computing models are based on the quantum bit, or "qubit." Gottesman-Kitaev-Preskill (GKP) quantum states are a topic of research for error correction when encoding qubits.

*Summary*

The invention is set out in the appended set of claims. The dependent claims set out particular embodiments.

*Brief Description of the Drawings*

The drawings primarily are for illustration purposes and are not intended to limit the scope of the subject matter described herein. The drawings are not necessarily to scale; in some instances, various aspects of the disclosed subject matter disclosed herein may be shown exaggerated or enlarged in the drawings to facilitate an understanding of different features. In the drawings, like reference characters generally refer to like features (e.g., functionally similar and/or structurally similar elements).

FIG. 1 shows a finite-energy square lattice GKP $|0\rangle$ state, including a superposition of displaced, squeezed states.
FIG. 2 shows an example of a Gaussian Boson Sampling (GBS) source, compatible with some embodiments.
FIG. 3 shows an example multiplexer (MUX), compatible with some embodiments.
FIG. 4 is a system diagram showing a system for generating a hybrid cluster state, according to an embodiment.
FIG. 5 shows example breeding circuits with one, three, and seven beamsplitters, according to some embodiments.
FIG. 6 illustrates an evolution of a two-mode $p$-quadrature marginal distribution as impacted by a beamsplitter and homodyne detector, according to some embodiments.
FIG. 7 is a violin plot of effective $p$-squeezing from a Monte Carlo simulation of a breeding circuit, according to some embodiments.
FIG. 8 shows an example breeding circuit (a) and simulated performance thereof, in the presence of detector loss (b) and beamsplitter loss (c), respectively.
FIG. 9 is a diagram of a breeding network with $M = 2$ (i.e., two rounds of breeding), according to some embodiments.
FIG. 10 includes a plot of effective $p$-squeezing (a) versus an angle $\theta'$ taken from the normal distribution of angles shown at (b), for a breeding protocol with input phase noise according to some embodiments.
FIG. 11 is a diagram of a breeding network with $M = 3$ (i.e., three rounds of breeding), according to some embodiments.
FIG. 12 shows cumulative probability distributions for effective p-squeezing in dB for various depths $M$ and swap-out probabilities $p_{swap}$, for beamsplitter efficiencies of (a) 99.6%, and (b) 99.2%, respectively, according to some embodiments.
FIG. 13 includes plots of median (a) effective $q$-squeezing and (b) effective $p$-squeezing as a function of swap-out probability $p_{swap}$ and circuit element efficiency $BS_{eff}$ after $M = 4$ rounds of cat state breeding, according to some embodiments.
FIG. 14 is a diagram showing a first method for generating a plurality of Gottesman-Kitaev-Preskill (GKP) quantum states of light, according to some embodiments.
FIG. 15 is a plot showing effective $p$-squeezing for an ideal circuit and homodyne measurements post-selected on the outcome $p_{meas} = 0$, according to some embodiments. FIG. 16 includes plots of median squeezing as a function of swap-out probability $p_{swap}$ and swap-in squeezed state squeezing $\mathcal{r}_{sq}$ (dB) after $M = 4$ rounds of cat state breeding, according to some embodiments.
FIG. 17 includes plots of optimal, binomial, and flat distributions of peak weights for 17 peaks, and shows the associated effective squeezing values, according to some embodiments.
FIG. 18 is a violin plot of the distribution of effective $p$-squeezing for various input and final states, according to some embodiments.

FIG. 19 shows plots of median Squeezing as a function of swap-out probability $p_{\text{swap}}$ and circuit element efficiency $BS_{\text{eff}}$ after $M$ = 3 rounds of three-peak state breeding, according to some embodiments.

FIG. 20 is a plot showing scaling of the number of peaks in the output state as a function of the breeding rounds for different numbers of initial peaks, according to some embodiments.

FIG. 21 is a diagram showing a second method for generating a plurality of Gottesman-Kitaev-Preskill (GKP) quantum states of light, according to some embodiments.

FIG. 22 is a diagram showing locations of peaks of a two-mode q-wavefunction of input states, in q-space, before (left) and after (right) entanglement is generated by a beamsplitter, according to some embodiments.

FIG. 23 is a diagram showing a third method for generating a plurality of Gottesman-Kitaev-Preskill (GKP) quantum states of light, according to some embodiments.

FIG. 24 is a diagram showing an evolution of a two-mode $q$-quadrature wavefunction using different beamsplitter angles, according to some embodiments.

FIG. 25 is a diagram showing a fourth method for generating a plurality of Gottesman-Kitaev-Preskill (GKP) quantum states of light, according to some embodiments.

## *Detailed Description*

Some embodiments set forth herein include systems and methods for generating a plurality of Gottesman-Kitaev-Preskill (GKP) quantum states of light, using at least one programmable beamsplitter and at least one programmable homodyne detector, and using initial quantum states of light including at least one of: a plurality of squeezed states of light, a plurality of approximate squeezed cat states of light, or a plurality of approximate states of light having at least 3 associated peaks.

System architectures described herein, in accordance with some embodiments, can be used to implement a photonic fault-tolerant quantum computer based on GKP qubits. Some such implementations include a "state factory," which refers to a combination of Gaussian Boson Sampling (GBS) devices and multiplexing components, as discussed in detail below.

### GKP Nomenclature

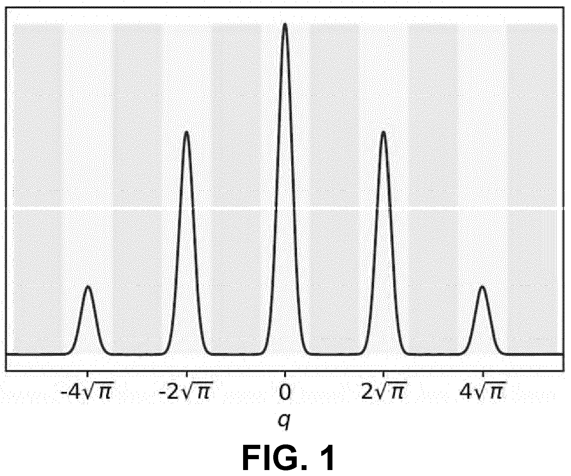

In its finite-energy form, a GKP state can be defined as a superposition of displaced, squeezed states with periodic spacing in both quadratures. FIG. 1 shows a finite-energy square lattice GKP $|0\rangle$ state, including a superposition of displaced, squeezed states. Due to the shape of the wavefunction (see FIG. 1), the squeezed states in the superposition are often referred to as the peaks, teeth, or lobes of the GKP state. A common metric for the quality of a GKP state is the level of squeezing in each of its teeth. The five peaks of FIG. 1 are separated by $2\sqrt{\pi}$ in the $q$ quadrature and each has roughly 12 dB of squeezing. As used herein, a state is squeezed when the noise in one variable is reduced below the symmetric limit at the expense of the increased noise in the conjugate variable such that the Heisenberg uncertainty relation is not violated.

### GKP state factory, stage I: GBS sources for state preparation

In some single GBS sources, squeezed states of light in a few optical modes are passed through an interferometer including phase shifters and beamsplitters before all but one of the modes are measured using photon-number-resolving (PNR) detectors. The PNR measurement is the non-Gaussian resource that allows for exotic wavefunctions to be produced.

As an example, in the ideal, lossless case, using three optical modes, a specific PNR pattern - e.g., occurring with a probability of ~0.1% - heralds a state with ~96% fidelity to a GKP $|0\rangle$ state with ~10 dB of squeezing and a peak spacing of $2\sqrt{\pi}$. Since these sources are probabilistic (albeit heralded), many copies of GBS circuits can be used in parallel to boost the probability of a GKP state being generated. As used herein, for a desired state to be "heralded" means that a device provides a signal that the desired state has been successfully generated / produced.

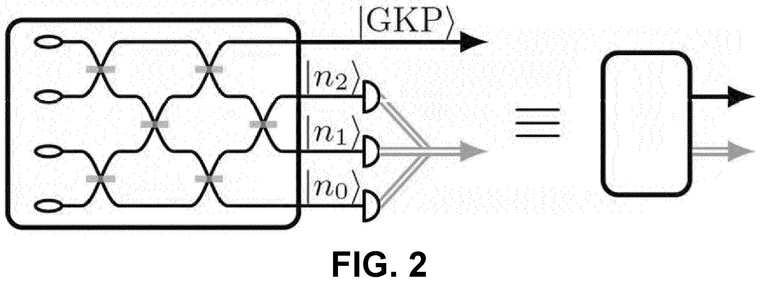

FIG. 2 shows an example of a Gaussian Boson Sampling (GBS) source, compatible with some embodiments. Additional details regarding GBS sources can be found, by way of example only, in "Blueprint for a scalable photonic fault-tolerant quantum computer," J.E. Bourassa, et al., Quantum, 5:392 (2021) ("Bourassa"). Referring to FIG. 2, displaced squeezed states in different spatial modes enter an interferometer, and all but one (i.e., $n_0$ through $n_2$) are sent to PNR detectors. The double lines represent classical logic, which can be used to trigger a switch on the emitted port. The right portion of FIG. 2 is a simplified representation of a single GBS device.

**GKP state factory, stage II: Multiplexer (MUX) and swap-outs**

A multiplexer, including a network of reconfigurable beamsplitters heralded on the PNR outcomes, shuttles the output of a successful GBS source to the next component. In the event that all GBS sources attached to a given MUX fail, the output of the MUX can be "swapped out" for a squeezed state of light, which can be produced deterministically.

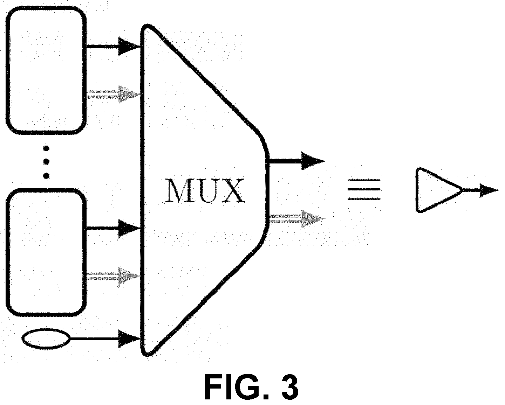

FIG. 3 shows an example multiplexer (MUX), compatible with some embodiments. The output states of several GBS sources (depicted on the left, similar to as shown in FIG. 2) and one squeezed state (depicted as an oval) are input to the MUX. If at least a single GBS source heralds a finite-energy GKP state, then that state is output. Otherwise, the squeezed state is output.

**Stitching and Quantum Processing Unit (QPU)**

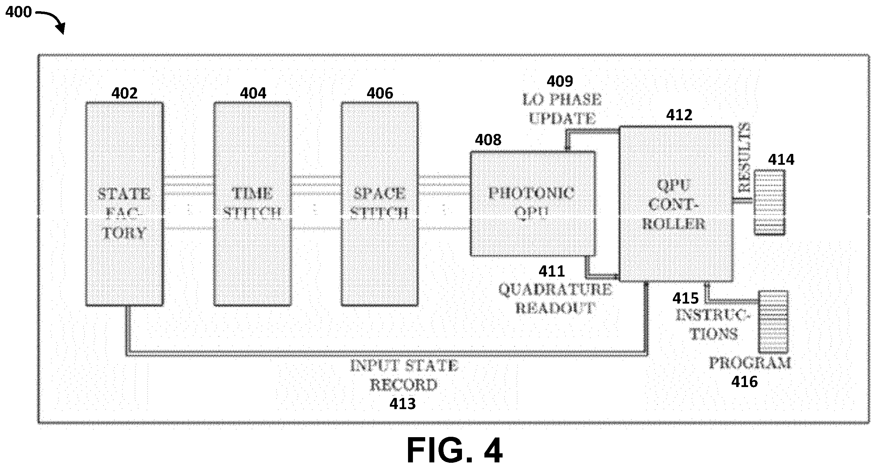

The GBS sources and MUX discussed above can provide a steady supply of either approximate GKP qubits or squeezed states of light. The stitching component (in this case, the network of beamsplitters) can interfere these output states in a network of static 50:50 beamsplitters with phase delays before sending / routing the states to a series of homodyne detectors, the results of which can be processed for decoding in a QPU, which may be implemented, for example, as shown in FIG. 4. FIG. 4 shows an example system 400 for generating a hybrid cluster state, according to an embodiment. The system 400 includes a state factory 402, a time stitch 404, a space stitch 406, a QPU 408, and a QPU controller 412. Each of the state factory 402, the time stitch 404, the space stitch 406, the photonic QPU 408, and the QPU controller 412 represents logical functionality that can be implemented using hardware, software, or a combination thereof. The state factory 402 is operably coupled to the time stitch 404, which in turn is operably coupled to the space stitch 406, which in turn is operably coupled to the photonic QPU 408. The state factory 402 component generates GKP states and outputs the GKP states to the time stitch 404, which implements delay line loops and chains qubits together as they are received. The space stitch component 406 multiplexes outputs from the time stitch 404, in the spatial domain, to produce multi-dimensional hybrid resource states. The photonic QPU 408, in turn, is controlled by the QPU controller 412 to entangle the hybrid resource states from the plurality of hybrid resource states into a higher-dimensional cluster state that includes states for fault-tolerant quantum computation. The QPU controller 412 can receive quadrature readouts 411 from the photonic QPU 408, and can send LO phase updates 409 to the photonic QPU 408 (e.g., to define or set which quadrature the homodyne detector is to measure). The QPU controller 412 can also receive instructions 415 associated with a program 416, and can output results 414. The stitching and QPU components can be configured to one or more of: create, generate, shape, measure, decode, or error-correct a selected entangled cluster state that serves as a resource for measurement-based fault tolerant quantum computation.

Challenges associated with practical implementations of a GKP state factory, which are addressed by some embodiments of the present disclosure, include:

State generation probability

The example three-mode device discussed above can generate a GKP state with a probability of ~0.1%. This can place a significant burden on the MUX, since for the MUX to boost the probabilities to 25%, 50%, 75%, 99% could involve, for example, ~300, 700, 1400, or 4600 GBS sources (multiply by three to get the number of squeezers), with switch tree depths of 10, 11, 12, 14, respectively. These are the overheads for generating a single node in the cluster state. The cluster state includes a plurality of optical modes referred to herein as a "macronode."

Quality of GKP states and scalability of GBS devices

Although some system architectures described herein are tolerant to swapping out GKP states for squeezed states (e.g., multiplexing to 100% is not required), leveraging the swap-outs may involve a need to improve the quality of GKP states (e.g., an amount of per-peak squeezing). Since the MUX improves the probability, but potentially not the quality, of the GBS output, larger GBS devices may be used (by way of example) to enhance the state quality. Increasing the size of GBS devices, however, is not necessarily a scalable way to improve GKP states, since increasing the size of GBS devices can involve more modes, deeper interferometers, and conditioning on more PNR outcomes, thereby potentially reducing the probability of successful outcomes.

Loss

Tied in with the previous two points, generating states with higher quality while maintaining a high-enough output probability may involve the use of GBS interferometers and/or MUX switching networks with larger depth(s). The associated increase in the number of optical components could result in higher losses.

One or more system embodiments set forth herein leverage several experimental resources across different components / physical resources, which include but are not limited to:

- **Squeezed vacuum states:** These can be the input states to the GBS sources, and they are swapped in at the output of the MUX when a GKP state fails to be produced.

- **Static linear-optical elements:** These can include the interferometers in the GBS sources and the network of beamsplitters and phase shifters in the stitching component.

- **PNR measurements:** These may be the only measurements in the state factory, or may be combined with other measurements.

- **Reconfigurable linear-optical elements:** One possible decomposition for the MUX is into a tree of 2×2 switches, e.g., including reconfigurable beamsplitters and phase shifters. The switches can be conditioned on out-comes of the PNR measurements in the GBS sources to shuttle a successful GBS output or insert a squeezed state into the stitcher.

- **Delay lines:** These can be used to allow time for the feedforward from the PNR measurements, and to allow for the stitcher to entangle modes in time.

- **Homodyne detectors:** These can be used at the output of the stitcher to perform measurements on the macronode cluster state to both reduce it to the canonical cluster state and to perform Measurement Based Quantum Computation (MBQC). In some implementations, homodyne detection is absent from the state factory. The measurement outcomes collected on the optical modes in the macronode (i.e., at the physical hardware layer) can be processed together to obtain an effective outcome for a node of the canonical cluster state (i.e., at the software layer).

For some error-correction schemes, a cluster state for fault-tolerant (FT) MBQC may warrant GKP states with per-peak squeezing of ~10-15 dB and corresponding swap-out probabilities of ~0-50% (e.g., where fewer squeezed state replacements are tolerated with lower dBs of squeezing). To attain these high-quality states, it may be desirable to use larger GBS devices, which in turn may warrant the use of larger MUX trees, since the probability of a successful heralding event may diminish with larger GBS circuits.

According to some embodiments of the present disclosure, state factories can be described in terms of two components: GBS sources and a generalized MUX or "state refinery." For GBS sources, a wider class of states may be produced, and for the state refinery, a component is introduced that not only has the capabilities of a standard MUX (boosting probability and swapping in squeezed states at the output), but which can also boost the quality of the output state.

Component 1: GBS sources

As discussed above, GBS devices are probabilistic sources of resource states based on squeezed states of light, linear optics and PNR detectors. In some embodiments, these sources are used to target not only specific GKP states, but also a wider family / class of resource states. More specifically, the latter may be referred to as *multi-tooth states*, defined herein as approximate superpositions of displaced squeezed states with periodic spacing between the peaks:

$$|\psi\rangle \propto \sum_n c_n \widehat{D}(\alpha_n)\hat{S}(r) |\text{vac}\rangle, \qquad (1.1)$$

where $|\psi\rangle$ represents the wavefunction of the state, $\propto$ represents proportionality, $c_n$ represents the peak coefficients, $\hat{D}(\alpha_n)$ represents the peak displacements, $\hat{S}(r)$ represents the per-peak squeezing, and $|\text{vac}\rangle$ represents the vacuum state. This class encompasses squeezed states (one peak), squeezed cat states (two peaks), and states with three or more peaks, which approach finite-energy GKP states. Note that some GKP states with ~3 peaks produced by three-mode GBS devices are subsumed in this family. As used herein, a "cat state" refers to a superposition of displaced quantum states, having N = 2 teeth. This family of states has various advantages, including:

1. They are useful for quantum error correction. They include a superposition of shifts, which is a fundamental structure for GKP error correction. Not all states in this family may be equally useful, but in principle, if one can generate states that are at least a superposition of a few teeth, it is at least partially useful for error correction. Cluster states may be built out of states from this family using the same or similar types of physical resources as those used for the stitching component/QPU (e.g., these input states may not necessitate PNR measurements in the QPU).

2. There are techniques for converting many multi-tooth states into high-quality GKP states, which may be useful when the state refinery is used.

Component 2: State Refinery

In some embodiments, given GBS sources capable of probabilistically producing multi-tooth states, a state refinery can be used to produce GKP states with a higher probability (e.g., similar to a standard MUX), and/or with a higher quality than that of the inputs (unlike a standard MUX). The state refinery can include a network (which may or may not be a tree-like network) of adaptive and static linear-optical elements along with homodyne detectors. Squeezed states can be swapped-in at the output of the MUX in the event that the entire state generation procedure fails. Moreover, the state refinery may benefit from swap-outs at intermediate stages of the network.

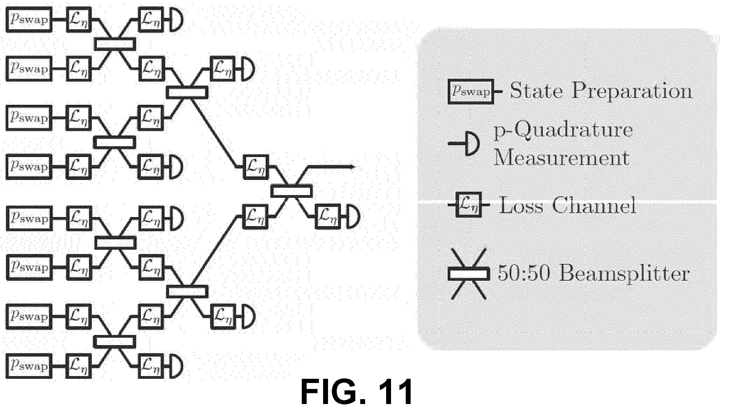

To illustrate a state refinery, consider a cat breeding protocol. Some cat breeding protocols take $m$ squeezed cat states as inputs, and output, with very high probability, a GKP state including a superposition of $m$ teeth. This can be achieved by combining the squeezed cats in a breeding network that includes a tree of static 50:50 beamsplitters of depth $\log_2 m$, and measuring all the modes in the tree except one with homodyne detectors. For an illustration of this circuit, see FIG. 11.

In terms of the state factory components discussed above, a cat breeding protocol may include, by way of example:

- GBS sources tailored to produce squeezed cat states; and
- A state refinery with:

  - $m$ standard MUX trees to boost the probability of having squeezed cat states (hence the inclusion of adaptive linear-optical elements in the state refinery); and
  - a breeding network with $m$ input ports accepting the outputs of the $m$ multiplexers. This network can include a tree of static 50:50 beamsplitters and homodyne detectors (hence the inclusion of homodyne measurements in the framework of a state refinery, optionally allowing for some of the linear-optical elements to remain static).

Presented below is a class of protocols that falls under the state refinery component. For example, a cat breeding protocol is explained below, in detail. In addition, a novel analysis of the cat breeding protocol in the presence of loss and phase noise is presented. In addition, a demonstration is made that the cat breeding protocol can be generalized to function with both squeezed cat states and squeezed states at the input, offering a practical way to accommodate probabilistic sources of squeezed cat states. This result motivates the option to include intermediate swap-outs in the state refinery, for example at the output of the standard MUX (which boosts the probability of squeezed cat states) but before the breeding circuit. A cat amplification protocol is also presented below, wherein by selecting a different homodyne quadrature setting in a standard breeding circuit, the output state is, with some probability, a squeezed cat state with greater separation between its teeth. Cats with greater tooth separation can, in turn, withstand more rounds of breeding. Such protocols motivate the ability to select various homodyne settings in the state refinery, optionally conditioned on the outcomes of earlier measurements. In addition, it is demonstrated below that the cat breeding protocol can, in some embodiments, be generalized to function with multi-tooth states as input. This further motivates considering a wider class of GBS outputs than just squeezed cats, explaining why a new GBS component includes a wider family of states to target. Also discussed below is a cat breeding protocol that can be generalized to function with multi-tooth input states that differ from input to input in their tooth separation and widths. Such generalizing can be achieved by performing adaptive breeding, meaning that the beamsplitters in the breeding network would have transmissivities other than 50:50. This line of inquiry is motivated by observing, with respect to the two-mode GBS device, that different PNR outcomes yield cat states with different spacings between the teeth. Thus, depending on the implementation, the state refinery may include adaptive beamsplitters, conditioned on the outcomes of the GBS devices, that can allow for more angle settings than the crossbar switches of a standard MUX. In addition, an exploration of a generalization of the breeding protocol is presented below, which includes static beamsplitter ratios beyond 50:50 to generate higher-quality GKP states, though in some instances with lower probability.

In some embodiments of the state factory, the GBS sources directly target a multi-peak GKP state and then the state refinery reduces to a standard MUX with its adaptive beamsplitters set to crossbar operation, no homodyne detectors, and only a swap-out at the end. It is also observed that the linear-optical circuit, subcomponents (beamsplitters and homodyne detectors), and homodyne measurements described in "Fault-tolerant quantum computation with static linear optics," I. Tzitrin, et al., PRX Quantum, 2(4):040353 (2021) ("Tzitrin,") for a stitching component, can be compatible with / used in state factories of the present disclosure.

How a modified state factory would meld with other components

Keeping with the modular nature of architectures described herein, it is contemplated that a state factory can be constructed that is a modification to (or a substitute for) known GBS and/or MUX components. Such a state factory can output states that can proceed to the stitching component and QPU. In the following sections, ways in which these modifications could have implications for the remainder of the architecture are considered.

Blurring the lines between the state factory, stitcher, and QPU

In some known proposed system architectures, PNR detectors are the sole measurement devices used as subcomponents of state factories, while homodyne detectors are the sole measurement devices used as subcomponents of the stitcher and QPU. As discussed above, and according to some embodiments, a possible modification to a state factory includes the use of a state refinery, which could be placed / positioned right before the stitching component or QPU. The state refinery could include, for example, subcomponents that interfere states at beamsplitters and measure them with homodyne detectors. Since the stitcher and QPU also interfere states at beamsplitters and measure them with homodyne detectors, it is conceivable that the state refinery in the state factory could ultimately be considered as part of the stitching component and/or reside on the same chip.

Information from the state factory for the decoder

In some embodiments, an updated state factory can be accompanied by an updated noise model for use in the decoder. Moreover, since an updated state factory may involve many measurement outcomes from PNR detectors and homodyne detectors, it may be beneficial to provide all of this information / data in some form to the decoder, either directly or by mapping it to an intermediate model for the form of the teeth in the output state.

Figure of merit: effective squeezing

Breeding is a technique of converting moderately useful squeezed cat states into extremely useful Gottesman-Kitaev-Preskill (GKP) qubits. Since the number of teeth and the appearance of relative phases can make the description of the state in terms only of tooth width and tooth separation challenging, an alternative approach is described below.

The quadrature distributions of "good" GKP states can have peaks that are periodically spaced according to a set of lattice points. For example, a square (rectangular) lattice GKP $|0\rangle$ state has peaks at $2n\sqrt{\pi}\ (2n\alpha\sqrt{\pi})$ in $q$ and at $n\sqrt{\pi}\ (n\sqrt{\pi}/\alpha)$ in $p$. See FIG. 1 for an example. The effective squeezing is a measure of how "periodically sharp" a quadrature distribution is. Good GKP states can have high effective squeezing (when measured in dB) in both $q$ and $p$ quadratures.

*Lattice-dependent phase*

For a given state $\rho$ with quadrature distribution, $\Pr(q) = \langle q|\rho|q\rangle$, a location for placement of the lattice, as well as how sharply distributed the state is with respect to this lattice, should be considered. One intuitive way to answer this is to associate each point along the $q$-axis with a phase proportional to $q$, $\phi(q) = \sqrt{2}\,\alpha q$. The desired period is related to $\alpha$ as $2\pi/\sqrt{2}\alpha$ (e.g., for a GKP sensor state / qunaught state, set $\alpha = \sqrt{\pi}$). The factor $\sqrt{2}$ could be absorbed into $\alpha$, but it will be useful to write it like this, as shall be apparent below. The mean value of this phase can then be calculated with respect to $Pr(q)$, as:

$$\langle\phi\rangle = \arg\left(\int \mathrm{d}q\, e^{i\sqrt{2}\alpha q}\Pr(q)\right) \qquad (3.1)$$

As used herein, the "sensor state" can be defined by its position wavefunction, which is $|\varnothing\rangle = \sum_{n=-\infty}^{\infty}|\sqrt{2\pi\hbar}n\rangle_q$ , that is, the superposition of all position eigenstates spaced by $\sqrt{2\pi\hbar}$ in position quadrature.

Furthermore, if $Pr(q)$ is spread out over a broad range of values (i.e., if $\rho$ is not a good GKP state), the above integral will average out to zero. On the other hand, if $Pr(q)$ is sharply peaked around some constant $q_0$ plus integer

multiples of $2\pi/\sqrt{2}\alpha$, the integral will be close to $e^{i\sqrt{2}\alpha q_0}$. The more closely the function is distributed near $q_0 + k \times 2\pi/\sqrt{2}\alpha, k \in \mathbb{Z}$, the closer the integral is to $e^{i\sqrt{2}\alpha q_0}$, and thus the closer its absolute value will be to 1. Thus, the number $\left|\int dq e^{i\sqrt{2}\alpha q} \Pr(q)\right|$ is a sensible figure of merit to use in determining the "periodic-sharpness" of the function in the q-quadrature, with respect to the period $\sqrt{2}\alpha/2\pi$.

*Relationship to stabilizers*

Importantly, the figure of merit in equation 3.1 is directly related to the GKP stabilizers, and is known as the phase of the stabilizer expectation value. In other words, the expectation value of the stabilizer $\hat{S}_\alpha = \hat{D}(\alpha)$, with $\widehat{D}(\alpha) = e^{\alpha\hat{a}^\dagger - \alpha^*\hat{a}} = e^{\sqrt{2}i(-\mathrm{Re}(\alpha)\hat{p} + \mathrm{Im}(\alpha)\hat{q})}$ is expected to be close to 1 for good GKP states. For imaginary $\alpha = i|\alpha|$, this expectation value can be calculated as:

$$
\begin{aligned}
\langle \hat{S}_\alpha \rangle &= \mathrm{Tr}\,(\widehat{D}(\alpha)\rho) \\
&= \mathrm{Tr}\left(e^{i\sqrt{2}|\alpha|\hat{q}} \int dq\, dq'\, \Psi_q(q,q')|q\rangle\langle q'|\right) \\
&= \mathrm{Tr}\left(\int dq\, dq'\, \Psi_q(q,q')e^{i\sqrt{2}\alpha q}|q\rangle\langle q'|\right) \\
&= \int dp\, e^{i\sqrt{2}\alpha p}\Pr(q)
\end{aligned}
\qquad (3.2)
$$

which is exactly the integral of Eq. 3.1. Thus, translational invariance in the p-quadrature is equivalent to periodic sharp peaks in the *q*-quadrature, and both effects are quantified by the figure of merit of Eq. (3.2), which can be referred to as the stabilizer expectation value. A similar figure of merit can be defined for the other GKP stabilizer, relating translational invariance in the *q*-quadrature with the sharpness of the peaks in the p-quadrature.

*Effective squeezing*

The expectation values can be rewritten as an *effective squeezing* value, as follows:

$$
\Delta_p^{\mathrm{eff}} = \sqrt{\frac{1}{|\alpha|^2}\log\left(\frac{1}{|\langle\widehat{D}(\alpha)\rangle|^2}\right)}
\qquad (3.3a)
$$

$$
\Delta_q^{\mathrm{eff}} = \sqrt{\frac{1}{|\beta|^2}\log\left(\frac{1}{|\langle\widehat{D}(i\beta)\rangle|^2}\right)}
\qquad (3.3b)
$$

The squeezing in dB is $\Delta[\mathrm{dB}] = -10\log_{10}(\Delta^2)$. The definitions in Eqs. (3.3) are motivated by the fact that a squeezed state with squeezing $\langle q^2 \rangle = \Delta^2 = e^{-2r}$ has $\Delta_q^{\mathrm{eff}} = \Delta$ and $\Delta_p^{\mathrm{eff}} = 1/\Delta$. Furthermore, for an approximate GKP state $e^{-\varepsilon\hat{n}}|GKP\rangle$, where $|GKP\rangle$ is an ideal GKP state, $\Delta_q^2 = \Delta_p^2 = \tanh(\varepsilon)$ is obtained (for small $\varepsilon$). Note that good GKP states should preferably have simultaneously small $\Delta_p$ and small $\Delta_q$ (associated with large values in dB). This is satisfied by approximate GKP states with small $\varepsilon$, but not by regular squeezed states, for which only one of the two is small. A high effective squeezing may be of use in achieving fault-tolerant quantum computation.

Note that, when calculating effective squeezing along $\hat{q}$ and $\hat{p}$, one does so for a given aspect ratio of the lattice "rectangle," set by the lattice variable $\alpha$. For a given $\alpha$, the effective squeezing along $\hat{q}$ and $\hat{p}$ are sensitive to the tooth width, but not to the separation of the teeth. Thus, one should take care when comparing the usability of GKP states with different $\alpha$ based on effective squeezing parameters. For example, consider applying a squeezing operator to the approximate GKP qubit such that the $\alpha$ parameter is rescaled to 1, and then use the effective squeezing for this squeezed version of $\alpha$.

Standard breeding protocol: review and performance analysis

*Description of the standard breeding protocol*

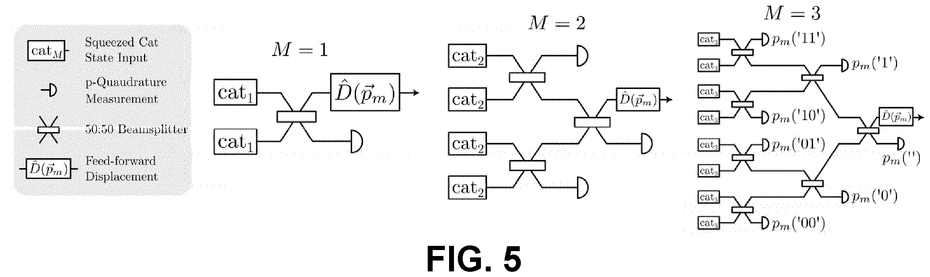

FIG. 5 shows a standard breeding circuit for $M \in [1, 2, 3]$. Note that the input squeezed cats depend on $M$, defined herein as the number of layers of beamsplitters the states pass through as they move from left to right. For example, for larger $M$, to obtain the same final spacing in the output state of the breeding circuit, the initial squeezed cat states should have greater separation in $q$ between their two peaks. As can be observed in FIG. 5, for $M = 1$, there is one layer with one beamsplitter. For $M = 2$, there are two layers: the first layer has two beamsplitters, and the second layer has one beamsplitter. For $M = 3$, there are three layers: the first layer has four beamsplitters, the second layer has two beamsplitters, and the third layer has one beamsplitter. The magnitude of the feed-forward displacement can depend on all homodyne measurement outcomes, and since the output GKP states are eventually measured with homodyne detectors, the feedforward displacement can be conjugated to the end of the circuit and applied in software.

*The circuit*

In some embodiments, the GKP-breeding circuit is a depth $M$ linear optics circuit as illustrated in FIG. 5. The $M = 1$ circuit includes two states merged on a 50: 50 beamsplitter followed by a $p$-quadrature homodyne detection on one of the output modes (more general beamsplitter angles are considered below). The depth $M > 1$ circuits can be constructed recursively by merging the outputs of two depth $M$ - 1 circuits on a beamsplitter, also with $p$-quadrature homodyne detection on one of the output modes.

*The input states*

Assume that the input is chosen as a function of $M$ so that the output after $M$ rounds of breeding has a desired (e.g., fixed in $M$) lattice spacing. The circuit of depth $M$ takes $2^M$ input squeezed cat states. For a target GKP state stabilized by $\hat{S} = \hat{D}(\alpha)$ (i.e. with peaks located at $\sqrt{2}\alpha n$ in $q$), each input cat state is given by:

$$|\text{input}\rangle = \left[ \widehat{D}\left(-\frac{\alpha}{2}\sqrt{2}^M\right) + \widehat{D}\left(\frac{\alpha}{2}\sqrt{2}^M\right) \right] \hat{S}(r)|\text{vac}\rangle \quad (3.4)$$

Thus, larger breeding circuits, i.e., larger $M$ breeding circuits, can use larger amplitude input squeezed cat states when targeting a GKP state with a fixed latticed spacing $\sqrt{2}\alpha$.

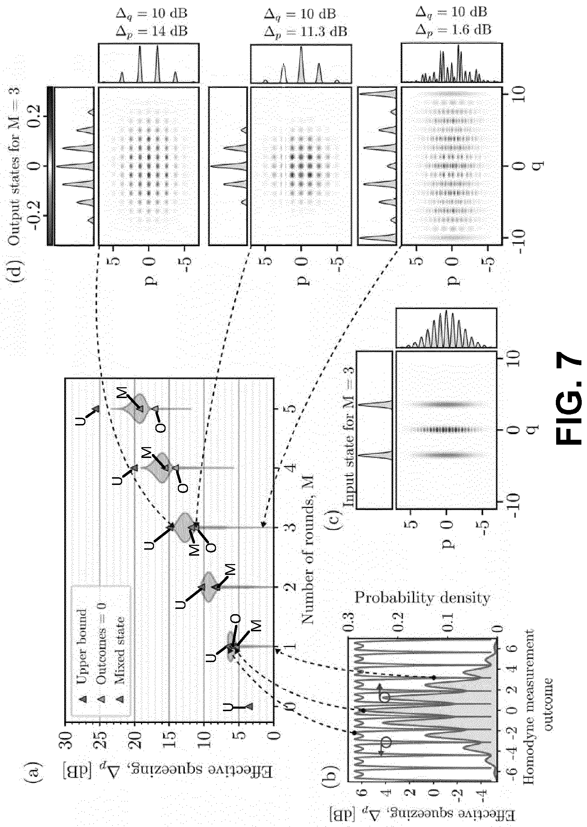

Note that the input cat states already exhibit periodic squeezing in both quadratures, see FIG. 7 at inset (c). The peaks in the $p$-quadrature, however, are tightly packed and thus less distinguishable compared to the peaks in the $q$-quadrature. The effect of the breeding circuit is thus to separate the peaks in the $p$-quadrature while maintaining the magnitude of squeezed peaks in both quadratures.

*Feedforward displacement*

For any $M$, the circuit ends with a single displacement operator along the $p$-quadrature, with a magnitude that depends on all of the homodyne measurement outcomes. Note that if the output GKP states are used in Bourassa blueprint architecture, the Tzitrin passive architecture, or in any Gaussian circuit, these displacements can be conjugated to the end and applied in software as a correction to the measured homodyne values.

*Output state*

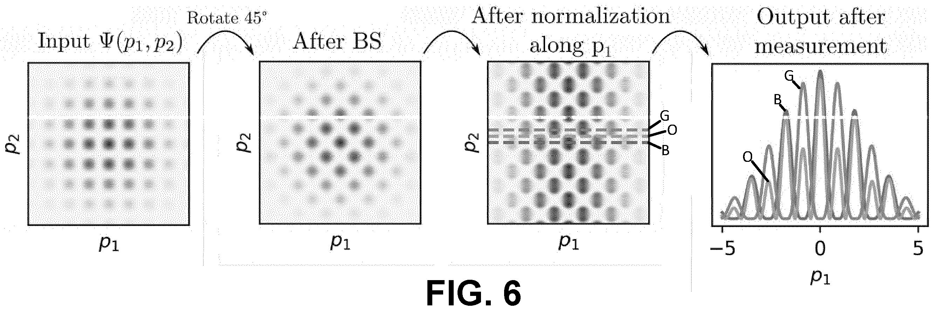

In some embodiments, the effect of each pair of beamsplitter and homodyne detector of the circuit can be visualized in terms of the two-mode $p$-quadrature marginal distribution $\Psi(p_1, p_2) = \langle p_1, p_2|\rho|p_1, p_2\rangle$, where $p_1$ is the $p$-quadrature marginal distribution variable for mode 1, and $p_2$ is the $p$-quadrature marginal distribution variable for mode 2, as illustrated in FIG. 6. The effect of 50:50 beamsplitting is to rotate the two-mode wavefunction by 45 degrees. A subsequent $p$-quadrature homodyne measurement then slices out a horizontal line in the two-mode wavefunction, producing the single-mode marginal distribution of the unmeasured mode. In FIG. 6 this is shown for the first round, i.e., with $\Psi_1 = \Psi_2 \propto \cos\left(\sqrt{2\pi}p\right)^2 e^{-p^2\Delta^2}$, where $\Delta$ is the per-peak squeezing of the input cat state. From this interpretation, it can be observed that the output state after the first round is centered around one of two possible bins.

Looking at the third subfigure of FIG. 6, a plurality of dots can be observed that correspond to concentrated regions of probability for the two-mode $p$-quadrature distribution. Notice that these dots line up in columns (also referred to herein as bins), but they don't all line up in the same row. Every second column of dots, however, lines up with one another.

Next, consider the slice labelled "G" and the slice labelled "B" - all of the dots that intersect along the row with slice G are in different columns from all the dots that intersect along the row with slice B. Suppose the columns for the dots that intersect slice G are defined as "odd" columns (or odd bins), and the columns for the dots that intersect slice B are defined as the "even" columns (or even bins). By sampling from $p_2$, one is likely to obtain either a line that intersects the odd bins resulting in the state in $p_1$ being located mainly in (i.e., centered around) the odd bins (as seen with curve G in the fourth subfigure), or to obtain a line that intersects the even bins, resulting in the state in $p_1$ being located mainly in (i.e., centered around) the even bins (as seen with curve B in the fourth subfigure). There is also the case of curve "O" in the fourth subfigure, that is both in the even and the odd bins. However, it can be observed from the third subfigure that slice O only really intersects the edges of dots, which correspond to regions of low probability, and thus sampling of the value of $p_2$ corresponding to slice O is less likely, as is obtaining the curve O in the fourth subfigure.

While the same idea illustrated in FIG. 6 can be used to visualize all steps of the breeding protocol, the dynamics of subsequent rounds can be more complicated (less symmetric) due to the involvement of unequal input states. The foregoing interpretation also demonstrates that the main effect of each breeding step is to separate the peaks in the $p$-quadrature by a factor $\sqrt{2}$, and optionally to apply a measurement-dependent shift. FIG. 6 shows an evolution of the two-mode $p$-quadrature marginal distribution during a beamsplitter and homodyne detector of the protocol, according to some embodiments. The example initial state shown in FIG. 6 is a product state of two squeezed cat states, $\Psi(p_1,p_2) = \Psi_0(p_1)\Psi_0(p_2)$ with $\Psi_0(p) \propto e^{-p^2\Delta^2}\cos^2\left(\sqrt{2\pi}p\right)$. The last subfigure of FIG. 6 shows three different output marginal distributions corresponding to three different homodyne measurement outcomes, as marked in the third subfigure. Still referring to FIG. 6, the $p$-quadrature wavefunction of the output state (before the feed-forward displacement) can be calculated as follows:

$$\psi(p) \propto \prod_{p_m} \exp\left(-\frac{p_m^2}{2}\Delta^2\right) \exp\left(-\frac{p^2}{2}\Delta^2\right)\prod_{\mathbf{x}} \cos\left(\sqrt{2}^{1-M}\alpha p - \phi_{\mathbf{x}}\right), \quad (3.5)$$

where $\Delta$ is the squeezing of the input cat state with amplitude $\alpha$, $p_m$ denotes the homodyne measurement results and x is over binary strings of length $M$. The phases $\phi_{\mathbf{x}}$ are functions of the homodyne measurement outcomes:

$$\phi_{\mathbf{x}} = \alpha \sum_{k=1}^{M} (-1)^{x_k}\sqrt{2}^{k-M} p_m(\mathbf{x}[k-1]), \quad (3.6)$$

where $\mathbf{x}[i]$ denotes the leading length-$i$ sub-string of $\mathbf{x}$ (see the $M = 3$ portion of FIG. 5 for an example of the labelling). The output $p$-quadrature wavefunction is thus a product of $2M$ cosines with different phases under a Gaussian envelope. For a suitable outcome of phases, this is a sharply peaked function, as desired. Using Eq. (3.5) and displaced versions, $\psi(p - \delta)$, any desired figure of merit may be calculated, and the feed-forward displacement $\delta$ may be selected to optimize, or at least improve, this figure of merit accordingly.

Performance of the standard breeding protocol without loss

*Summary of results*

The quality of the output GKP state from breeding depends in general on all homodyne measurement outcomes in the breeding network. The probability of outputting poor quality states decreases with increasing $M$, however, meaning that the protocol tends towards being deterministic. For breeding to on average result in a state with at least 10 dB worth of effective squeezing, it should be repeated multiple times (e.g., at least 3 times). This does not depend strongly on the tooth squeezing in position of the inputs.

The performance of the breeding protocol, in accordance with an embodiment, was simulated as follows:

Algorithm 1: Steps for simulating the standard breeding protocol

1. The number of breeding rounds $M$ was fixed.

2. The initial states for that $M$ were propagated through the breeding circuit and homodyne outcomes were sampled on all but the output mode.

3. The effective squeezing of the state in the output mode was calculated.

4. The foregoing was repeated multiple times, to obtain a distribution of effective squeezing for that $M$.

5. A procedure similar to the foregoing was repeated, but for different *M*, to determine how the distribution varied.

The quality of output state as a function of breeding rounds *M* is illustrated in the violin plot of FIG. 7 at inset (a), which shows the distribution of the effective *p*-quadrature squeezing of states output by the breeding circuit. Some observations include that the effective *p*-squeezing of the output states generally increased with *M*, and that the effective squeezing of the state obtained from averaging all output states of the circuit (green triangles) also increased with *M*. In FIG. 7, inset (a) shows a violin plot of effective *p*-squeezing from Monte Carlo simulation (2000 samples for each *M* ) of the breeding circuit, targeting GKP qunaught states. *M* = 0 rounds corresponds to a squeezed cat state. "Upper bound" denotes the theoretical limit to the effective squeezing based on the number of *q*-quadrature peaks of the output state. "Outcomes = 0" denotes the states obtained from post-selecting all homodyne measurement outcomes at the value 0. "Mixed state" denotes the effective squeezing of the mixed state obtained as the statistical mixture of all sampled states after the feed-forward displacement. This squeezing level is thus deterministically produced by the breeding circuit. FIG. 7, inset (b) shows effective squeezing (upper curve, left axis) and probability density (lower curve, right axis) for the different homodyne measurement outcomes after *M* = 1 round of breeding. FIG. 7, inset (c) shows the input squeezed cat state for the *M* = 3 circuit with 10 dB squeezing, and FIG. 7, inset (d) shows Wigner functions and quadrature marginal distributions of example output states for *M* = 3 with different homodyne measurement outcomes.

In view of the foregoing, the circuit can be operated in a deterministic mode where all outputs are accepted, or in a probabilistic mode where only the best outputs are accepted. That is, one can trade quality for success rate, but the circuit can still output meaningful states when accepting all outputs. For example, for *M* = 3 rounds, the mixed output state deterministically obtained from averaging all measurement outcomes (see triangles labelled "M" for "mixed state" at inset (a) of FIG. 7) has more than 11 dB effective squeezing. The Wigner functions of FIG. 7 at inset (d) show different example output states at *M* = 3, corresponding to different sets of homodyne measurement outcomes. Note that the effective *q*-squeezing is independent of the measurement outcomes and is equivalent to the effective squeezing of the input state.

As seen from FIG. 7 at inset (a)the output obtained when post-selecting on all homodyne measurement outcomes yielding 0 (lowermost triangles at rounds 3, 4, and 5) is worse than most other outcomes produced by the circuit. That is, while post-selecting on 0 does yield acceptable GKP states, there are many other measurement outcomes yielding even better states. This is also shown in FIG. 7 at inset (b), showing the output effective squeezing for *M* = 1 as a function of the homodyne measurement outcome. Indeed, the result output at 0 corresponds to a local minimum of the effective squeezing. Note also from FIG. 7 that the measurement outcomes yielding poor quality states coincide with dips in their probabilities of occurrence. This is in general true also for larger *M*, i.e., the protocol has a much higher probability of outputting high quality states than low quality states.

Performance of the standard breeding protocol with loss

*Summary of results*

For *M* = 4 rounds, less than about 1.7% detector loss and 0.7% beamsplitter loss should occur to deterministically obtain more than 10 dB of effective squeezing. For *M* = 3 rounds, less than about 1.1% detector loss and 0.4% beamsplitter loss should occur to deterministically obtain more than 10 dB effective squeezing. Losses at beamsplitters are equivalent to both loss at the detectors and loss on the output state of the breeding protocol, so they are strictly worse than losses just at the detectors. The *p* = 0 homodyne outcome, while sub-optimal in the lossless case, becomes optimal with more loss.

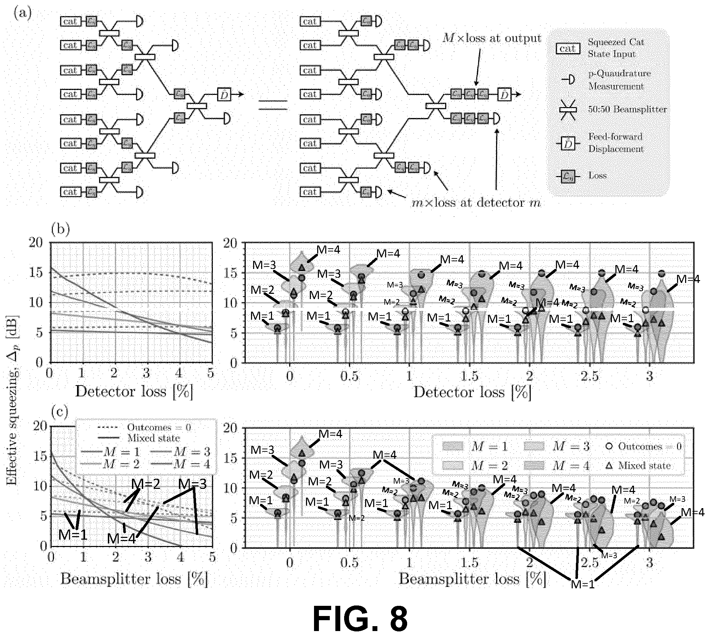

The performance of the breeding circuit is sensitive to losses occurring either at the detectors or the beamsplitters. FIG. 8 at inset (a)shows that by commuting losses through the 50:50 beamsplitters, beamsplitter loss is equivalent to losses at the detectors as well as at the output. Comparing loss of equal magnitude, beamsplitter loss is therefore strictly worse than detector loss. Without wishing to be bound by theory, it is believed that the reason is that beamsplitter losses are equivalent to or approximate a growing amount of noise to both the detectors and the outputs.

To simulate the effect of loss, the procedure of Algorithm 1 was used, this time adding loss channels in the breeding circuit. FIG. 8 at insets (b) and (c) show simulation results of the obtainable effective squeezing levels in the presence of detector loss and beamsplitter loss, respectively, at each circuit element. As can be observed from FIG. 8, losses can limit the optimal depth *M* of the circuit. For example, with 3% loss at each beamsplitter, the performances at *M* = 2 and *M* = 3 are similar, and better than the performance at *M* = 4. As expected, detector loss is less severe than beamsplitter loss of equal magnitude.

Interestingly, some measurement outcomes are particularly robust against detector loss. In particular, contrary to the lossless case, the output obtained when post-selecting on all homodyne measurement outcomes equaling 0 (circles) is now among the best possible cases when moderate loss is considered. This can be understood from FIG. 8 at inset (b), since the outcome at 0 represents a local minimum of the effective squeezing in dB. Detector losses are equivalent to a blurring of the measurement outcome. At $p_m = 0$, losses thus corresponds to an averaging of states, which in general have better performances than the one at 0. Indeed, when considering only measurement loss, FIG. 8 at inset (b), the effective squeezing post-selected at outcomes 0 can in fact increase with increasing loss. Of course, one could just have post-selected on a larger window around 0 to begin with to obtain better squeezing in the absence of loss. In other words, detector losses are not necessarily beneficial in practice.

The loss at each beamsplitter of FIG. 8 at inset (a) is equivalent to a growing amount of loss at the detectors as well as at the output. FIG. 8 at insets (b, c) shows performance of the output states in the presence of detector loss and beamsplitter loss, respectively. Note that the same amounts of loss (the values indicated on the horizontal axes) are applied at each $M$. However, the plots are slightly shifted for each $M$ for visual clarity. The trends of the "Outcomes = 0" and "Mixed state" cases are shown on the left to illustrate where increasing $M$ is no longer helpful.

Standard breeding with phase noise.

*Summary of results*

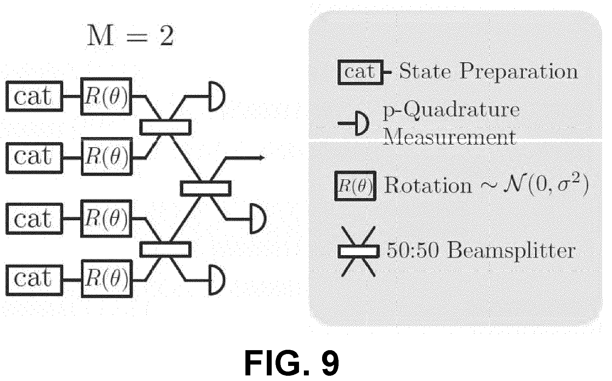

Small amounts of phase noise at the input are tolerable. A transition point exists for the acceptable phase noise, however, beyond which it is not beneficial to have deeper breeding circuits. Consider the case where input squeezed cat states have undergone an unwanted phase space rotation by an angle $\theta$ before entering the breeding circuit. To analyze the effect of such phase rotation, simulation steps similar to those in Algorithm 1 can be performed, but with the added step of applying initial rotations on each of the $2M$ modes, where the rotation angles are sampled independently from a normal distribution $\mathcal{N}(0, \sigma^2)$ having a mean 0 and a variance $\sigma^2$ (see also FIG. 9). The simulations here are restricted to an initial per-peak squeezing for the squeezed cat states of 10 dB.

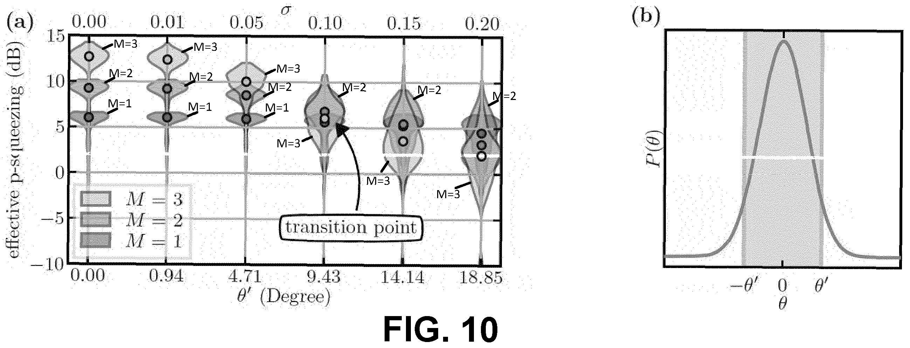

FIG. 9 is a diagram showing the breeding network with $M = 2$. Initially prepared squeezed cat states undergo a coherent rotation error $R(\theta)$ where $\theta \sim \mathcal{N}(0, \sigma^2)$ is drawn from a normal distribution with mean 0 and variance $\sigma^2$. In FIG. 10, at inset (a), the effective $p$-squeezing is plotted as a function of the number of breeding rounds $M$ and the amount of phase noise as parametrized by $\sigma$. For clarity, the standard deviation has been converted to the angle $\theta'$, which describes the right edge of the interval in which 90% of the rotation angles $|\theta|$ fall. See FIG. 10 at inset (b) for a visualization.

From the simulation data, it was found that the susceptibility of the protocol to spurious rotations of the input states increases with the number of rounds (or the number of input states). The simulation also shows, however, that for $M = 3$ rounds of breeding, rotation angles $\theta' < 5$ degrees allows one to obtain grid states with an effective $p$-squeezing over 10 dB if other circuit components are ideal. Importantly, a transition point is observed at $\theta' \approx 10°$, beyond which it is not useful to increase the depth of the breeding circuit.

FIG. 10 at inset (a) shows effective $p$-squeezing for the standard breeding protocol with input phase noise. The results are plotted against the standard deviation $\sigma$ of the normal distribution. For clarity, the standard deviation has been converted to the angle $\theta'$, which describes the right edge of the interval in which 90% the rotation angles $\theta$ fall (see inset (b)). Results are shown for up to $M = 3$ rounds of breeding and for an initial per-peak squeezing of 10 dB.

Breeding with probabilistic sources of squeezed cat states: swapping in deterministic squeezed states is allowable

One demanding aspect of the standard breeding protocol is the requirement that all input states be squeezed cat states, which puts a large burden on multiplexing in an all-optical setting where only a probabilistic supply of squeezed cat states from GBS-like devices may be expected. This section explains that, in the event that a squeezed cat state is not available as input to the breeding network, it can be substituted for a $q$-squeezed state a certain fraction of the time. This is analogous to the ability to swap out a certain fraction of GKP states in the fault-tolerant cluster state for $p$-squeezed states, for example as discussed in "Blueprint for a scalable photonic fault-tolerant quantum computer". As discussed herein, the standard protocol can still generate useful output states with qualities that are a function of the swap-out probability $p_{\mathrm{swap}}$ as well as the level of squeezing in the swapped-in squeezed states. To this end, consider the following breeding network that is an adaption of the standard breeding protocol discussed above.

FIG. 11 is a diagram of the breeding network used for $M = 3$ rounds of breeding. Initially, ideal input squeezed cat states are prepared with probability $1 - p_{\mathrm{swap}}$, otherwise the input state is replaced by a $q$-squeezed state with finite squeezing $r_{\mathrm{sq}}$. Each circuit element is assumed to have a finite efficiency, such that each mode that interacts with it will be sent through a loss channel $\mathcal{L}(\eta)$ with transmittivity (efficiency) $\eta$ before the ideal circuit element.

Error Model

*Lossy Circuit Elements*

Lossy or inefficient circuit elements can be modeled by applying a loss channel to each mode that interacts with this circuit element *before* applying the ideal element. In particular, when a particular circuit element is said to have an

efficiency $\eta$, then each mode $\hat{a}$ that interacts with this element undergoes the following transformation:

$$\mathcal{L}(\eta): \hat{a} \mapsto \sqrt{\eta}\hat{a} + \sqrt{1-\eta}\hat{b}, \quad (3.7)$$

where $\hat{b}$ is another bosonic mode initially prepared in the vacuum state. For simplicity, it can be assumed that each circuit element has the same efficiency $\eta$.

*Probabilistic preparation of input states*

In some embodiments, the source of the input (squeezed cat states) may be expected to be probabilistic, e.g., obtained from a Gaussian Boson Sampling circuit, and possibly concatenated with a probabilistic cat-state amplification gadget. Thus, there is a finite probability that an insufficient amount of squeezed cat states are supplied to the breeding circuit. However, it is straightforward to realize that no-show cats do not pose a significant threat to the successful generation of sufficiently squeezed GKP states if it is assumed that the on-demand deterministic creation of vacuum squeezed states $|\Delta\rangle_q$ is possible.

<u>Summary of Results</u>

*Performance as a function of swap-out probability*

In some embodiments, each squeezed cat state that is substituted with an ordinary squeezed state reduces the number of peaks in the $q$-quadrature of the output state by 1. The protocol is relatively insensitive to swap-outs. For example, swap-out probabilities up to 50% will reduce the expected effective squeezing in the $p$-quadrature of the output state by, at most, 3 dB.

*Performance as a function of the squeezing level $r_{sq}$ of the squeezed states*

In some embodiments, the effective p-squeezing is independent of the squeezing level of the squeezed states. A higher level of squeezing in the squeezed states will "boost" the effective q-squeezing of the output state; however, the gains are insignificant.

*Performance of swap-outs under lossy conditions*

The qualitative behavior of the performance as function of swap-probability is not significantly altered in the presence of inefficient circuit elements.

*Performance with finite swap-out probability*

An analysis was performed to determine how the effective squeezing of the output state of the breeding circuit depends on the swap-out probability of the input states. The simulation steps were as follows:

Algorithm 2: Steps for simulating the standard breeding protocol.

The number of breeding rounds $M$, a swap out probability $p_{swap}$, and a loss channel strength $\eta$ were fixed. Using $p_{swap}$, a configuration of initial squeezed and squeezed cat states was sampled. The initial states were propagated through the breeding circuit and homodyne outcomes were sampled on all but the output mode. The effective squeezing of the state in the output mode was calculated. The foregoing was repeated multiple times to obtain a distribution of effective squeezing for those values of $M$, $p_{swap}$ and $\eta$. The same procedure was then repeated, but for different $M$, $p_{swap}$ and $\eta$, to determine how the distribution varied with these parameters.

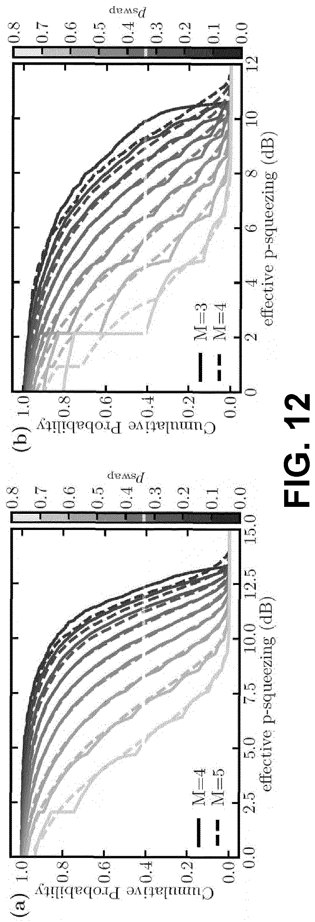

In FIG. 12, the cumulative probability distributions of selected simulation results are shown, as a function of the effective $p$-squeezing, for beamsplitter efficiencies of (a) 99.6% and (b) 99.2%. These efficiencies were selected as they are in the regime where an additional round of breeding is offset by the additional losses introduced to the network. For example, for efficiencies of 99.6% breeding networks with $M = 4$ or $M = 5$ rounds perform approximately equally. The number of rounds $M$ is indicated by solid/dashed lines. The curves correspond to different levels of $p_{swap}$, with the darkest being 0% and the lightest being 80%. The plots can be read as follows: for a given effective $p$-squeezing on the $x$-axis, the corresponding $y$-coordinate of a curve corresponds to the probability of obtaining that effective $p$-squeezing or greater. For example, in FIG. 12 at inset (a), for $p_{swap} = 80\%$, the probability of getting an effective squeezing of roughly 7.5 dB or greater is about 10%.

From the simulations, a few observations can be made:

- The protocol is relatively robust to values of $p_{swap}$ on the order of 10s of percent. That is a significant fraction of input squeezed cat states that can fail.

- Suppose one desires to take the output of the breeding circuit and feed it forward to the next stage of the architecture (stitching), e.g. 80% of the time. For each increase of 10% in $p_{swap}$ at the input to the breeder, the effective $p$-squeezing of the output state degrades by ~0.5-1 dB, with the degradation in quality becoming more severe for larger $p_{swap}$.

- Considering operation in the regime where loss is offsetting or negating the benefits of adding an extra round of breeding, an extra round does not suddenly become feasible by decreasing $p_{swap}$. The quality of the output state would certainly improve, but it would still not be worthwhile to add an extra round of breeding. This suggests that accurately determining the efficiencies of the circuit elements, i.e., beamsplitters and homodyne measurements, is an important part to determine the *ideal* depth of breeding network.

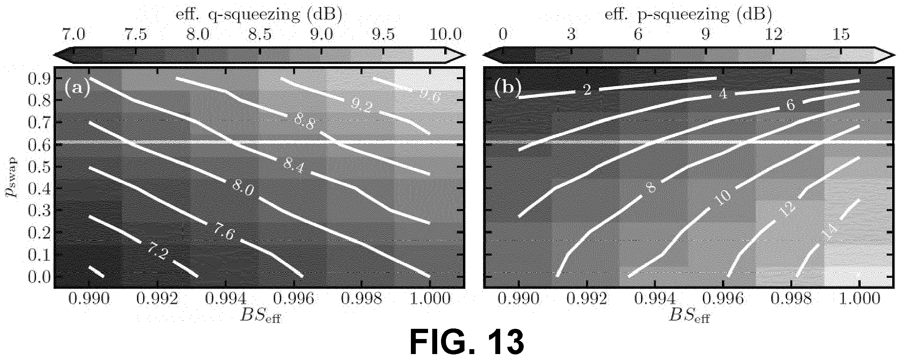

To supplement FIG. 12, FIG. 13 shows the median squeezing after $M = 4$ rounds of cat state breeding, i.e., 50% of output states have better effective squeezing than this amount. In the case of $p_{swap} = 0$, the resulting state thus has

$$N_{\text{peaks}}^{\text{final}} = 2^4 + 1 = 17$$ peaks in the $q$-quadrature. The results are shown as a function of both swap-out probability $p_{swap}$ and circuit element efficiency $BS_{eff}$, to better understand the performance under lossy conditions.

To show the impact of swap-outs on the effective $q$-squeezing value, the squeezing of the cat states was selected to be 8 dB while the inserted squeezed states were assumed to have 10 dB of $q$-squeezing. This is best observed in FIG. 13 at inset (a) for the simulation results for $BS_{eff} = 1.0$. There, it can be observed that the effective $q$-squeezing of the output state increases if $p_{swap}$ increases, because the probability that the cat state is bred multiple times with a squeezed state increases. The drawback becomes apparent in FIG. 13 at inset (b), where it can be observed that effective $p$-squeezing is significantly reduced. This is expected because breeding a superposition of squeezed states with a (single-peak) squeezed state will not increase the number of peaks. As the number of peaks sets an upper bound on the achievable squeezing, the effective $p$-squeezing is expected to decrease when $p_{swap}$ increases.

FIG. 13 shows median (a) effective $q$-squeezing and (b) effective $p$-squeezing as a function of swap-out probability $p_{swap}$ and circuit element efficiency $BS_{eff}$ after $M = 4$ rounds of cat state breeding. The initial squeezing of the cat state is set to 8 dB while the inserted squeezed states are assumed to have 10 dB of $q$-squeezing. Note that different scales are used across the top of each panel.

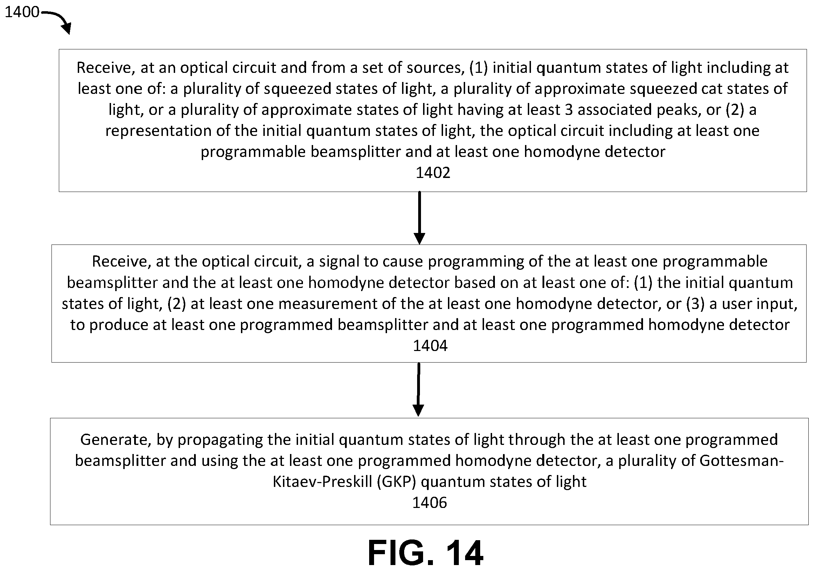

FIG. 14 is a diagram showing a first method for generating a plurality of Gottesman-Kitaev-Preskill (GKP) quantum states of light, according to some embodiments. As shown in FIG. 14, the method 1400 includes receiving, at 1402, at an optical circuit and from a set of sources in optical communication or electrical communication with the optical circuit, initial quantum states of light including at least one of: a plurality of squeezed states of light, a plurality of approximate squeezed cat states of light, or a plurality of approximate states of light having at least 3 associated peaks, the optical circuit including at least one programmable beamsplitter and at least one homodyne detector. The method 1400 also includes receiving, at 1404, at the optical circuit, a signal to cause programming of the at least one programmable beamsplitter and the at least one homodyne detector. The programming is based on at least one measurement of the at least one homodyne detector to produce at least one programmed beamsplitter. The method 1400 also includes generating, at 1406, a plurality of Gottesman-Kitaev-Preskill (GKP) quantum states of light by propagating the initial quantum states of light through the at least one programmed beamsplitter and using the at least one programmed homodyne detector.

In some implementations, the plurality of sources includes a plurality of Gaussian Boson Sampling (GBS) sources. Alternatively or in addition, the optical circuit can be a breeding network. Alternatively or in addition, the at least one programmed beamsplitter includes a beamsplitter that is configured to operate as an optical switch.

In some implementations, the generating the plurality of GKP quantum states of light includes $M$ rounds of refinement of the initial quantum states of light, where $M > 1$. Alternatively or in addition, the generating the plurality of GKP quantum states of light can be based on sampled homodyne outcomes at intermediate modes of the optical circuit during operation of the optical circuit.

In some implementations, the initial quantum states of light includes the plurality of approximate squeezed cat states of light, and each approximate squeezed cat state of light from the plurality of approximate squeezed cat states of light is identical to each remaining approximate squeezed cat state of light from the plurality of approximate squeezed cat states of light.

Qualitative explanation of robustness to swap-outs

This section discusses why the protocol is relatively robust against swap outs, especially if one goes to higher number of rounds, i.e., $M \geq 3$. In a work titled "Generation of optical Gottesman-Kitaev-Preskil states with cavity QED," by J. Hastrup, et al., arXiv:2104.07981 (April 2021), accessible at: http://arxiv.org/abs/2104.07981, the authors derived that for a state including a superposition of $N_{peaks}$ $q$-squeezed states:

$$|\psi_{in}\rangle \propto \sum_{n=1}^{N_{peak} \geq 2} c_n \hat{D}(\alpha_n)\hat{S}(r)|\text{vac}\rangle , \quad (3.8)$$

the effective $p$-squeezing in dB takes the form:

$$\Delta_p^{\text{eff}} = -20\log_{10}\left[\frac{1}{2\pi}\ln\left(\frac{N-1}{N}\right)\right], \qquad (\text{dB}), \quad (3.9)$$

when the set of coefficients $\{c_n\}_{\text{bin}}$ follows a binomial distribution. This state with $N = 2^M$ can be obtained from the standard breeding protocol after $M$ rounds of breeding and post-selecting the homodyne measurement outcomes on $p_{\text{meas}} = 0$.

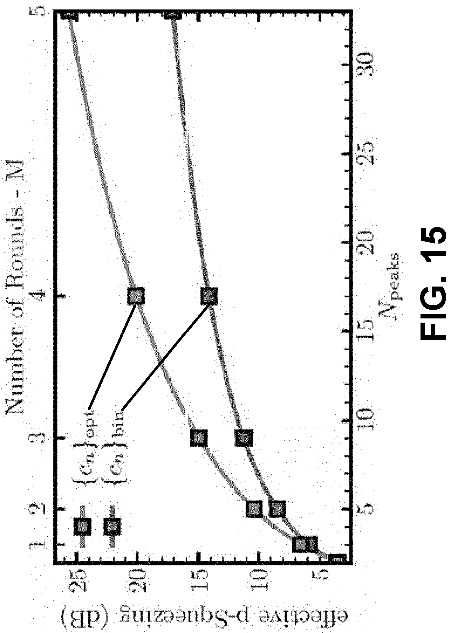

It so happens that states with $N_{peaks} < 2^M$ are obtained from an $M$ round breeding protocol in which some of the initial squeezed cat states are replaced by ordinary $q$-squeezed states. Through the observation that breeding a state with $N$ peaks with a squeezed cat state (two peaks) yields a state with $N + 1$ peaks, one finds an expression for the number of peaks depending on the number of swapped-in squeezed states $N_{\text{sq}}$ that has the form $N_{peaks} = 2^M - N_{\text{sq}} + 1$. In FIG. 15, it can be seen that Eq. (3.9) becomes relatively flat for large $N_{peaks}$. Thus, when swapping-in a number of squeezed states $N_{\text{sq}}$ that is small with respect to $2^{M-1}$, the change in effective $p$-squeezing stays small, since effective $p$-squeezing is related to the number of peaks in $q$. Also, the upper bound for the effective $p$-squeezing is obtained numerically by optimizing the coefficients $c_n$. While the slope of the curve is slightly steeper, the overall explanation still holds.

FIG. 15 is a plot showing obtainable effective $p$-squeezing for an ideal circuit and homodyne measurements post-selected on the outcome $p_{\text{meas}} = 0$. Markers show the results for 0 to 5 rounds of breeding. Solid lines show the results for states of the form Eq. (3.8) where the set of coefficients $\{c_n\}_{\text{bin}}$ (lower curve) follows a binomial distribution and for the optimal set of coefficients $\{c_n\}_{\text{opt}}$ (upper curve).

Performance analysis with respect to $r_{\text{sq}}$

While replacing input states with ordinary squeezed states is not desired, it is noted here that doing so can have favorable consequences in the case of circuit elements that have non-unit efficiency $\eta \neq 0$. This can be seen by fixing a value along the x-axis in FIG. 13(a) with $BS_{\text{eff}} < 1.$, e.g., $BS_{\text{eff}} = 0.996$. There, it can be observed that median effective q-squeezing for $p_{\text{swap}} = 0.0$ is reduced to approximately 7.6 dB or, in other words, by about 5% from the input value of 8 dB. Looking at the same $BS_{\text{eff}}$ but now at $p_{\text{swap}} = 0.4$, it can be seen that the squeezed states "boost" the effective $q$-squeezing back to approximately 8 dB. While this seems promising, this reduces the effective $p$-squeezing from about 12 dB to 10 dB, which aligns with the theoretical expectations. These expectations are based on the average 3 dB expected effective $p$-squeezing gain per round. With a swap-out probability of 40% one loses on average almost a full round of breeding, yielding the reduction by 2 dB. This insight motivates the following question:

Question. *Considering* $\Delta_{\text{eff}}^2 = \frac{\Delta_1^2+\Delta_2^2}{2}$ , *for which q-squeezing value(s) of the squeezed cat and the ordinary squeezed state, does the effective q-squeezing of the cat state increase by* 3 dB? Interestingly, one finds, using the analytical expression for the squeezing gain,

$$\Delta_{\text{gain}} = \sqrt{\frac{\Delta_1^2+\Delta_2^2}{2}} - \Delta_1, (3.10)$$

that $\Delta_{\text{gain}} \to 1/\sqrt{2}$ for $\Delta_2 \to \infty$ and $\Delta_1 = \text{const}$. Expressed in dB, this means, the squeezing gain is limited by $10\log_{10}(2) \approx 3$ dB.

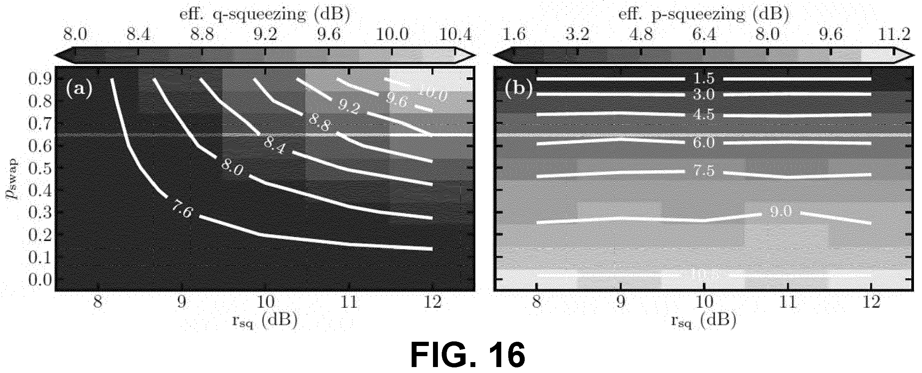

To summarize and answer the question whether there are any advantages of using higher squeezing in the swapped-in squeezed states we note that: (1) the squeezing of the squeezed state should at least match the $q$-squeezing of the squeezed cat state that it is replacing, otherwise the swapped-in state will reduce the effective $q$-squeezing, and (2) the effective $p$-squeezing is independent of the $p$-squeezing of the squeezed states, see FIG. 16. Substituting a breeding round that increases the effective $p$-squeezing for a round that "boosts" the effective $q$-squeezing is, in at least some cases, not worth it. If the probabilistic source of squeezed cats dictates a certain $p_{\text{swap}}$, then it may be desirable to keep that level of $p_{\text{swap}}$ (rather than artificially make it higher) and swap in squeezed states with as high a squeezing level as possible.

The plots of FIG. 16 show median squeezing as a function of swap-out probability $p_{\text{swap}}$ and swap-in squeezed state squeezing $r_{\text{sq}}$ (dB) after $M = 4$ rounds of cat state breeding. The initial squeezing of the cat state is set to 8 dB and the circuit element efficiency is set to $BS_{\text{eff}} = 99.4\%$ for (a) effective $q$-squeezing and (b) effective $p$-squeezing. Note that different scales are used across the top of each panel.

Further generalizations to the protocol

*Standard amplification and combinations of amplification and breeding*

By using the breeding circuit in FIG. 11 but instead measuring $q$-quadrature using homodyne detection instead of $p$, one can probabilistically increase the amplitude of the input squeezed cat states. Such a method may be used for taking low amplitude squeezed cats output by GBS to higher amplitude, with the same hardware as breeding. This also means that simply by changing the homodyne quadrature, rounds of amplification and breeding could be interspersed in the same circuit.

In some embodiments, methods / protocols for non-squeezed cat state amplification can be used or adapted to amplify squeezed cats. This is ensured by the fact that equal squeezing applied to the input modes of a beamsplitter is equal to the same squeezings applied after a beamsplitter. For example, the process can be implemented by interfering two cat states of amplitude $\alpha$ on a beamsplitter, measuring one of the output modes, and selecting successful preparation of a cat state of amplitude $\sqrt{2}\alpha$ conditional on the measurement outcome. Such a measurement can be performed with homodyne detectors.

*Amplification with homodyne detectors*

An example cat amplification protocol using homodyne detection is as follows. Two small cats interfere at a beamsplitter, output mode 2 is measured by homodyne detection, and the $q$-quadrature $\approx 0$ result is post-selected. This is the same circuit as used for breeding (see FIG. 11) except with $q$- instead of $p$-quadrature measurement. After the beamsplitter, the state is $|\text{vac}\rangle|\text{cat}(\sqrt{2}\alpha)\rangle + |\text{cat}(\sqrt{2}\alpha)\rangle|\text{vac}\rangle$. The 2nd term in that superposition is much more likely to result in a $q = 0$ measurement because $|\langle\text{vac}|q = 0\rangle|^2 \gg |\langle\text{cat}(\sqrt{2}\alpha)|q = 0\rangle|^2$ for any significant value of $\alpha$. The unnormalized state produced when $q = 0$ is

$$|\text{cat}(\sqrt{2}\alpha)\rangle + \frac{|\text{vac}\rangle}{\sqrt{\left(1+e^{4\alpha^2}\right)/2}} \quad (3.11)$$

The fidelity of the output state can be very high even if the $q$-quadrature measurement result is significant compared to the vacuum quadrature standard deviation. The fidelity increases with $\alpha$ because the probability to obtain $q \approx 0$ decreases so rapidly as $\alpha$ grows. For example, if one uses two copies of $|\text{cat}(\sqrt{2})\rangle$ to make $|\text{cat}(2)\rangle$, the success probability is $\approx 20\%$ to obtain an output state of fidelity practically indistinguishable from 1.

The foregoing protocol has been demonstrated in two experiments, but in different contexts: "Experimental generation of squeezed cat states with an operation allowing iterative growth," by J. Etesse, et al., Physical review letters, 114(19):193602 (2015), and "Enlargement of optical Schrödinger's cat states," by D.V. Sychev, et al., Nature Photonics, 11(6):379-382 (2017). In Sychev, the input states had fidelity 0.84 with an ideal cat state of amplitude $\alpha = 1.15$ that had been squeezed by 1.74 dB. The output state had fidelity 0.77 with an $\alpha = 1.85$ cat, squeezed by 3.04 dB. (Both of these squeezings were chosen in the analysis to optimize fidelity, and they both compress the cat in the $q$-quadrature direction.) They accepted any $q$-quadrature measurement result $|q| < 0.3$, which gave success probability 0.2. Etesse achieved fidelity of 0.61 with an $\alpha = 1.63$ cat squeezed by an unknown amount, with success probability 0.13. Such a method could be used, with the same equipment as the GKP breeding protocol, to increase the amplitude of cat states. Its success probability is reasonably high, and the success probability increases as the cat amplitude increases. It can also be used to grow squeezed cats. Note that the methods of Etesse and Sychev differ from those set forth herein in several ways, including: they do not use states generated from GBS devices, they require the two input states to be the same (whereas some embodiments set forth herein involve adapting the beamsplitter angle based on differing input states to ensure the protocol works), they only consider amplifying approximate squeezed cat states (whereas some embodiments set forth herein consider multipeak states as well), and they consider the amplification module in isolation (whereas some embodiments set forth herein consider the amplification module as one operating mode of a larger refinery for states that also includes breeding and multiplexing).

## Starting the protocol with multi-peak states

An interesting observation is that there is wide class of acceptable input states for the breeding protocol, namely superpositions of displaced squeezed states of the form:

$$|\psi_{\text{in}}\rangle \propto \sum_{n=0}^{N \geq 1} c_n \widehat{D}(\alpha_n) \hat{S}(r) |\text{vac}\rangle, \quad (3.14)$$

with the only constraint being that at least some of the input states are a superposition of two or more ($N \geq 2$) displaced squeezed states. To produce an output state stabilized by $D(\alpha)$, one may specify $\alpha_n \in \left\{ \frac{\alpha}{2}(1 + 2n - N)\sqrt{2}^M \right\}$. This observation is investigated in this section further, and the main results of these investigations are listed below.

## Summary of Results

*Performance vs. the number of teeth in the input states*

Assuming identical swap probabilities and ideal circuit elements, multi-tooth states reach final states with more peaks along the $q$ quadrature in fewer rounds. If one wishes to target an output state with a fixed number of peaks in the $q$-quadrature, the effective $p$-squeezing obtained from breeding multi-peak states is not automatically better than breeding squeezed cat states. It was observed that the multi-peak state can either perform inferior or superior to the squeezed cat state depending on the particular choice of the individual peak coefficients $c_n$ in Eq. 3.14.

*Number of rounds saved starting with more peaks*

Starting with 3 (or 5) peaks instead of 2 peaks, one saves 1 (or 2) rounds of breeding, i.e., one obtains a final state with the same number of peaks with 1 (or 2) fewer rounds of breeding.

*Performance of multi-peak input states under swap-outs and losses*

Targeting the same number of peaks in the output state, multi-peak states quickly outperform two-peak squeezed cat states in the presence of non- ideal circuit elements. The qualitative performance reduction with finite swap-out probabilities is comparable to squeezed cat states with swap-outs; however, multi-peak states will be harder to create and are expected to have higher swap-out probabilities in comparison with cat states.

*Optimal peak weights*

It is not too surprising that the breeding protocol can function with input states that are superpositions of more than two squeezed states. Consider the standard breeding protocol from the "Description of the standard breeding protocol" section above: after using squeezed cat states in the first round, the input states to the second round are superpositions of three squeezed states. Thus, instead of generating squeezed cats, one may elect to directly generate superpositions of three squeezed states and feed them into the breeding network.

However, generating a (symmetric) superposition of three squeezed states comes with an extra degree of freedom: the choice of coefficients $\{c_n\}$ to weight the peaks. While sending squeezed cats through one round of breeding generates a superposition of squeezed states, the coefficients in the superposition are unlikely to be optimal (with respect to effective squeezing), so when the option to directly generate superpositions of three squeezed states for breeding is available, one can consider what choice of coefficients is optimal. The following section presents an investigation into how generalizing the breeding protocol to include multi-peak states at the input can depend on the choice of peak weights $c_n$.

The distribution of weights $c_n$ can be symmetric around a maximum since otherwise the amplitude of outer peaks with respect to the $q$ quadrature will be reduced. For the standard protocol with squeezed cat states, this leaves only equal weights: $c_0 = c_1$. After a single round of breeding, the resulting state has three peaks with coefficients $c_0$, $c_1$ and $c_2$. The value of the coefficients $c_n$ will depend on the measurement outcome of the homodyne measurement, i.e., $c_n(p_m)$. For the measurement outcome $p_m = 0$, the coefficients follow a binomial distribution $c_1 = 2c_0 = 2c_2$.

However, as noted herein, the measurement outcome $p_m = 0$ is not optimal with respect to maximizing the effective squeezing. Since the effective squeezing in $p$ only depends on the set of coefficients $\{c_n\}$ if the overlap between individual peaks is negligible and if they are centered at correct positions, it is possible to numerically obtain an optimal weight distribution (with respect to effective squeezing) by maximizing the displacement expectation value that is given by:

$$\langle \hat{D}(\alpha) \rangle = \sum_n c_n^* c_{n+1} \quad (3.15)$$

This means that when directly preparing multi-peak states for the input to the breeding network, in addition to saving rounds of breeding to get to more peaks in $q$-quadrature, it is also possible to obtain better output states since states can be prepared with optimal sets of coefficients.

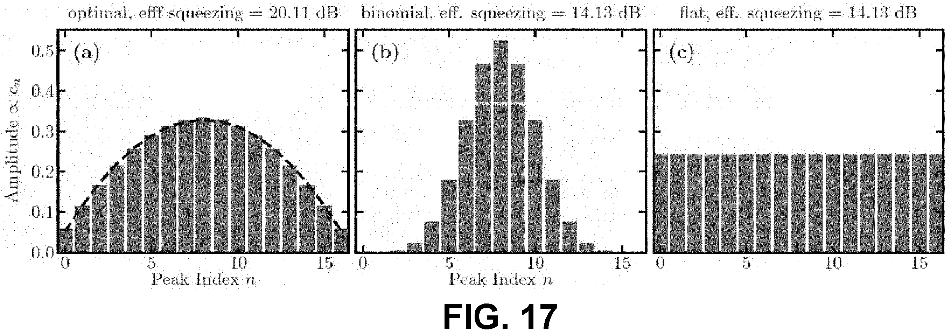

In FIG. 17 at inset (a), the optimal peak distribution for $N_{peaks}$ = 17 is shown, and, for comparison, the corresponding binomial distribution in FIG. 17 at inset (b) that would be obtained after $M$ = 4 rounds of breeding squeezed cat states and post-selecting on the $p_m$ = 0 outcome. Note that a flat distribution of peak coefficients $\{c_n\}_{flat}$ leads to the same effective squeezing as the binomial distribution (see FIG. 17 at inset (c)). It was numerically determined that the optimal distribution effectively follows a quadratic function (see the dashed black line in FIG. 17 at inset (a) that corresponds to the best fit).

Thus, the performance of the protocol for states with different numbers of peaks will depend on the particular choice of the individual peak coefficients $c_n$. Therefore the following can be concluded: suppose one wished to initiate the breeding protocol with multi-peak states to save $K$ rounds of breeding; the naive option would be to target the multi-peak input state to have the coefficients $\{c_n\}$ that one would have generated after $K$ rounds of breeding. However, if one has the freedom to choose a different multi-peak state, one should pick an alternative set of coefficients that will perform even better as input to the remaining rounds of the breeding network. Those alternative coefficients may not even have been possible to generate with $K$ rounds of breeding.

The graphs of FIG. 17 show optimal, binomial, and flat distributions of peak weights $c_n$ for $N_{peaks}$ = 17 peaks and the corresponding effective squeezing values. (a) The optimal peak distribution follows roughly a quadratic function centered at $\left\lfloor N_{peaks}/2 \right\rfloor$. (b) The binomial decays much quicker away from its maximum

Performance of multi-peak input states

Since the number of peaks in the output state determines the upper limit of the achievable effective $p$-squeezing, multiple questions may be considered, as discussed below.

Question. *Is it always advantageous to choose input states with more than $N$ = 2 peaks, assuming the same per-peak squeezing and identical swap-out probabilities*?

The assumption that the multi-tooth states have the same per-peak squeezing and swap-out probability as the $N$ = 2 is very strong.

Assume a goal of creating an output state with a fixed number of final peaks $N_{peaks}^{final}$. The results discussed above for $N$ = 3 peaks suggest that the answer to this question is yes, though it is noted that the answer could depend on the following details: the particular choice of the input state, i.e., the choice of coefficients $c_n$; the targeted number of peaks for the output state; and/or details of the circuit elements (e.g., efficiencies of individual circuit elements).

Regarding the choice of input state, note that one could "naively" choose the coefficients of a state with $N$ = 3 peaks as $\{c_n\}_{bin} \propto \{1,2,1\}$, that is, following a binomial distribution. One finds numerically, however, that the set of coefficients $\{c_n\}_{opt} \propto \{0.877, 1.24, 0.877\}$ is optimal in the sense that it maximizes the effective squeezing figure of merit.

Thus, given a goal of creating a final state with $N_{peaks}^{final} = 3$, performing a single round of breeding with two ordinary squeezed cat states with coefficients $\{c_n\}_{cat} \propto \{1,1\}$ will in some cases produce three-peak states with a higher effective $p$-squeezing than the three-peak state with coefficients $\{c_n\}_{bin}$. One could, however, always choose to directly generate the three-peak state with optimal coefficients.

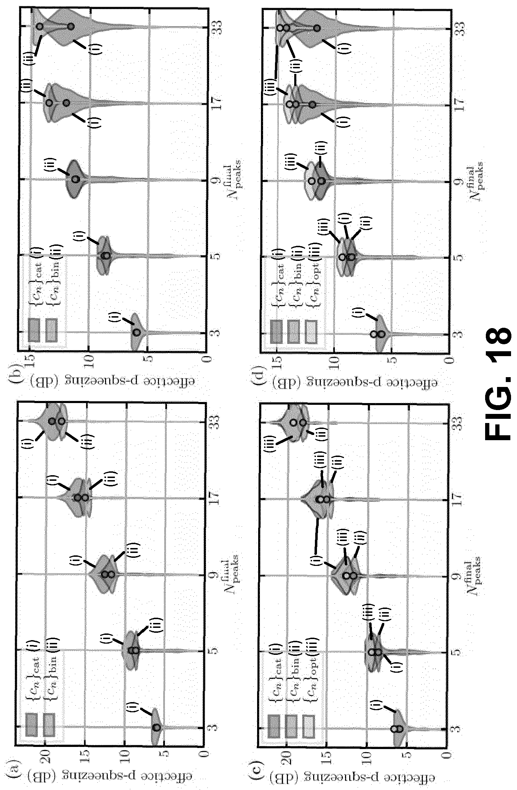

Interestingly, one finds that this small advantage due to the non-optimal choice of coefficients $\{c_n\}_{bin}$ becomes significant if the number of desired peaks is increased (see FIG. 18 at inset (a)). Hence, it is also clear that the answer to the question posed above depends on the targeted number of peaks for the output state.

The foregoing holds true for ideal circuit elements, and taking into account also FIG. 18 at inset (c), the answer to the question changes. Considering, for example, circuit elements with finite efficiencies of $\eta$ = 99.6%, is it observed that, for desired output states with $N_{peaks}^{final} \geq 9$, the three-peak input state with coefficients $\{c_n\}_{bin}$ has caught up to the standard squeezed cat state. The reason is that the two-peak cat state involves an additional round of breeding, which leads to an overall increase in losses in the breeding circuit.

Performance of multi-peak input states under swap-outs and losses

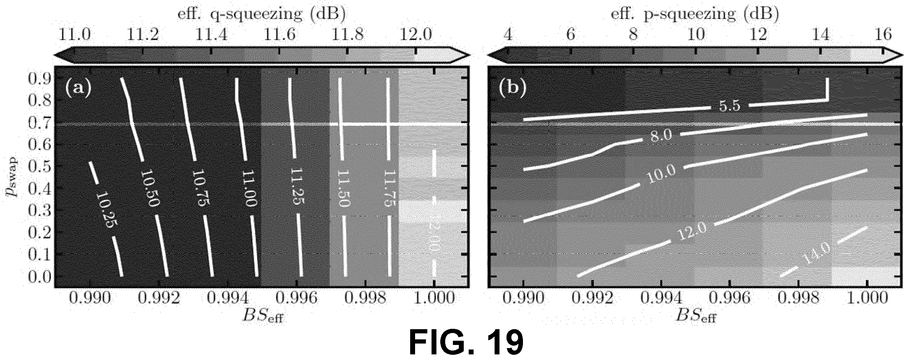

In FIG. 19, the effective median $q$-squeezing and $p$-squeezing are shown for the three peak state with coefficients $\{c_n\}_{\text{bin}}$, as a function of swap-out probability $p_{\text{swap}}$ and circuit element efficiency $BS_{\text{eff}}$, after $M = 3$ rounds of breeding. The output state has 17 peaks and therefore is comparable to the output state after $M = 4$ rounds of breeding with squeezed cat states. Losses and swap-out have qualitatively similar effects on the three-peak state and the cat state. Compare also FIG. 19 at inset (b) with FIG. 13 at inset (b). Quantitatively, there are significant differences especially in the low efficiency sector of the plots. For example, at $BS_{\text{eff}} = 99.2\,\%$ and $p_{\text{swap}} = 0$, there is a difference of about 4 dB of effective $p$-squeezing at the output state. The state with the optimal coefficient set $\{c_n\}_{\text{opt}}$ performs qualitatively similarly. The initial per-peak squeezing of the state is set to 12 dB and the inserted squeezed states are assumed to have 12 dB of $q$-squeezing. (a) shows effective $q$-squeezing and (b) shows effective $p$-squeezing. Note that different scales are used across the top of each panel.

FIG. 18 is a violin plot of the distribution of effective $p$-squeezing for various input and final states. (a) and (c) show results with ideal circuit elements while (b) and (d) show the results for finite-efficiency circuit elements with $\eta = 99.6\%$. Top and bottom plots show identical data, except that in the bottom row the results are shown for $\{c_n\}_{\text{opt}}$, which are omitted in the top row for clarity.

Number of rounds saved starting with more peaks

The number of peaks $N_{M+1}$ in round $M + 1$ is given through the number of peaks in round $M$ of the breeding protocol, i.e., $N_{M+1} = 2N_M - 1$. Solving this recurrence equation, one obtains an expression for the number of $N_{\text{peaks}}^{\text{final}}$ after M rounds of breeding when starting with an initial state that has $N_{\text{peaks}}$ initial peaks. This relation is given by:

$$N_{\text{peaks}}^{\text{final}} = \left(N_{\text{peaks}} - 1\right)2^M + 1. \qquad (3.16)$$

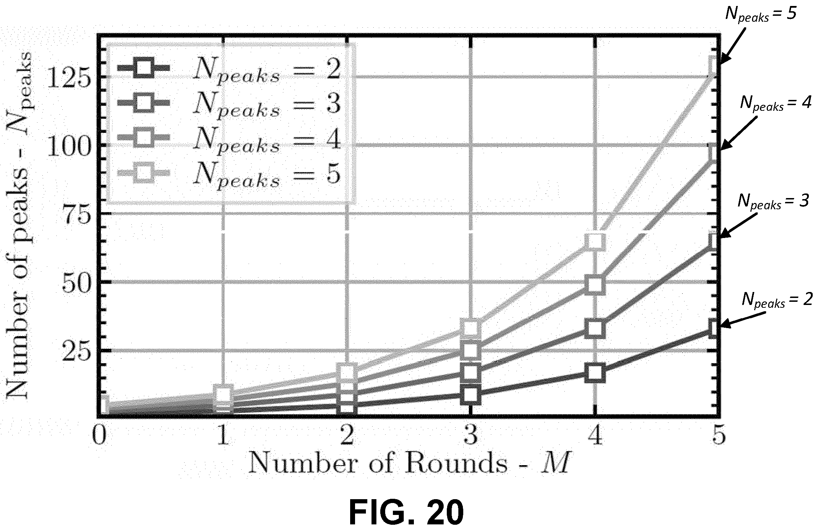

Thus, one gains $2^M(N_{\text{peaks}} - 2)$ additional peaks after $M$ rounds over the standard protocol with $N_{\text{peaks}} = 2$ (see also FIG. 20).

FIG. 20 is a plot showing scaling of the number of peaks in the output state as a function of the breeding rounds for different numbers of initial peaks. The y-axis represents $N_{\text{peaks}}^{\text{final}}$.

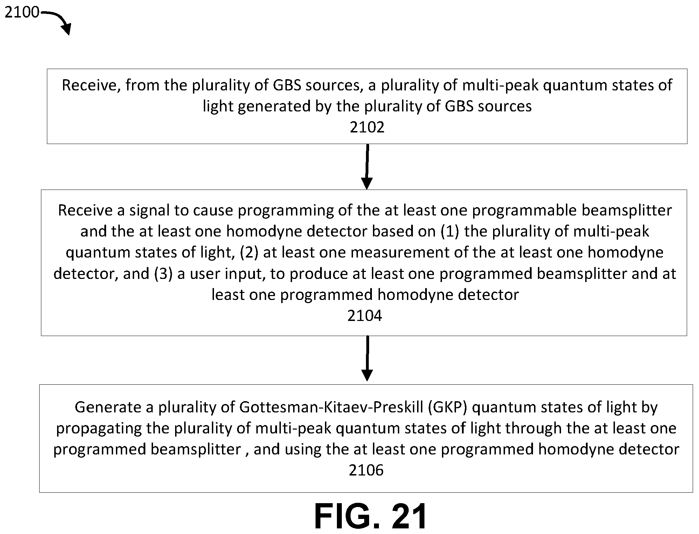

In some embodiments, a system for generating a plurality of GKP quantum states of light includes a plurality of Gaussian Boson Sampling (GBS) sources and an optical circuit in at least one of optical communication or electrical communication with the plurality of GBS sources. The optical circuit can include at least one programmable beamsplitter and at least one homodyne detector. Such a system can be configured to implement a method, e.g., the method 2100 shown in FIG. 21, in which, at 2102, the optical circuit (or a processor operably coupled thereto) receives, from the plurality of GBS sources, a plurality of multi-peak quantum states of light generated by the plurality of GBS sources. At 2104, the optical circuit (or the processor operably coupled thereto) receives a signal to cause programming of the at least one programmable beamsplitter and the at least one homodyne detector based on (1) the plurality of multi-peak quantum states of light, (2) at least one measurement of the at least one homodyne detector, and (3) a user input, to produce at least one programmed beamsplitter and at least one programmed homodyne detector. The optical circuit also generates, at 2106, a plurality of Gottesman-Kitaev-Preskill (GKP) quantum states of light by propagating the plurality of multi-peak quantum states of light through the at least one programmed beamsplitter, and using the at least one programmed homodyne detector.

In some implementations, each multi-peak quantum state of light from the plurality of multi-peak quantum states of light is a directly-generated superposition of at least three squeezed states of light. Alternatively or in addition, the plurality of multi-peak quantum states of light can include at least one of: a plurality of squeezed states of light, a plurality of approximate squeezed cat states of light, or a plurality of states of light having at least 3 associated peaks. Alternatively or in addition, the optical circuit can be configured to generate the plurality of GKP quantum states of light by applying $M$ rounds of refinement to the plurality of multi-peak quantum states of light, where $M > 1$. Alternatively or in addition, the optical circuit can further be configured to generate the GKP quantum states of light by propagating a plurality of ordinary squeezed states of light through the at least one programmed beamsplitter, in addition to propagating the plurality of multi-peak quantum states of light through the at least one programmed beamsplitter.

In some implementations, each multi-peak quantum state of light from the plurality of multi-peak quantum states of light is a symmetric superposition of the at least three squeezed states of light for that multi-peak quantum state of light. Alternatively or in addition, each multi-peak quantum state of light from the plurality of multi-peak quantum states of light has more than 2 peaks.

Starting the protocol using states with variable tooth spacing and tooth width

Motivated by two-mode GBS devices outputting squeezed cat states with different levels of spacing between the teeth, it was found that two multi-tooth states with different spacings between the teeth and different peak widths can still be put through a round of breeding to produce a state with more peaks by using a beamsplitter that is not 50:50. This is an alternative approach to applying an adaptive measurement-based squeezing operation to all the input states so that they have the same per-peak spacing.

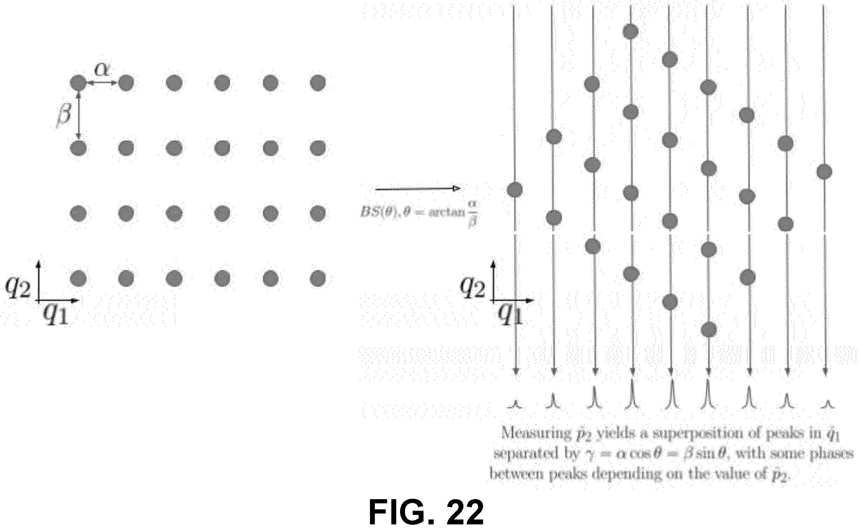

FIG. 22 is a diagram showing locations of peaks of a two-mode $q$-wavefunction of input states, in $q$-space, before (left) and after (right) entanglement is generated by a beamsplitter, according to some embodiments. A round of adaptive breeding can be understood by examining the two-mode $q$-wavefunction of the input states. Mode 1 has a certain number of peaks with spacing $\alpha$, while mode 2 has a different number of peaks with spacing $\beta$. Each circle represents the location of these peaks in $q$-space: on the left, before any entanglement is generated by the beamsplitter, and on the right after the beamsplitter is applied. For the special angle of $\theta = \arctan\frac{\alpha}{\beta}$, the peaks line up such that a measurement of $\hat{p}_2$ will yield a superposition of peaks in $\hat{q}_1$ with equal spacing $\gamma = \alpha\cos\theta = \beta\sin\theta$, and some phases depending on the value of $\hat{p}_2$.

The analysis of two-mode GBS circuits set forth herein illustrates that if the circuit parameters are fixed, varying the number of photons counted results in states with different separation between the teeth. A breeding protocol can thus be developed that is capable of handling a pair of input states each with some number of teeth, but potentially with differing tooth spacing. This could be either because an asymmetric pair of input states had been targeted deliberately, or a situation that arose due to the randomness of the photon counting. The former case would be static, the latter adaptive.

Consider next the breeding of states with differing lattice spacings, where the inputs have different tooth widths as well. In such scenarios, breeding is possible as long as the beamsplitter that interferes both inputs can be tuned in a way that only depends on the tooth separation (and not on the tooth widths).

Consider:

$$|\psi_1\rangle = \sum_{s_1=u_1}^{v_1} C_{s_1} X(s_1\alpha_1)S(r_1)|0\rangle, \text{ and} \qquad (3.17)$$

$$|\psi_2\rangle = \sum_{s_2=u_2}^{v_2} C_{s_2} X(s_2\alpha_2)S(r_2)|0\rangle, \qquad (3.18)$$

for positive integers $v_1$, $v_2$, negative integers $u_1$ and $u_2$, (real) lattice spacing parameters $\alpha_1$ and $\alpha_2$, (real) squeezing parameters $r_1$ and $r_2$, and the height of the $s_j^{\text{th}}$ tooth of mode $j$ $C_{s_j}$. Note that $X(s) = \exp(-is\hat{p})$.

Consider mixing these on a beamsplitter and then performing $\hat{p}$ homodyne detection on mode 2, i.e.,

$$I \otimes {}_p\langle m|BS(\theta)|\psi_1\rangle \otimes |\psi_2\rangle \quad (3.19)$$

Up to normalization, this is equivalent to:

$$I \otimes {}_p\langle m|BS(\theta)\left[\sum_{s_1=u_1}^{v_1} C_{s_1} X(s_1\alpha_1)\right]\left[\sum_{s_2=u_2}^{v_2} C_{s_2} X(s_2\alpha_2)\right]\exp\left[-\frac{1}{2\eta_1}\hat{p}_1^2 - \frac{1}{2\eta_2}\hat{p}_2^2\right]|0\rangle_q \otimes |0\rangle_q$$

$$(3.20)$$

for $\eta_j = e^{-2r_j}$. This is then equal (up to a global phase and normalization) to

$$\left[\sum_{s_1=u_1}^{v_1} C_{s_1} e^{-is_1\alpha_1(c_\theta\hat{p}_1 + s_\theta m)}\right]\left[\sum_{s_2=u_2}^{v_2} C_{s_2} e^{-is_2\alpha_2(c_\theta m - s_\theta\hat{p}_1)}\right] Z\left(m\frac{\frac{c_\theta}{2\eta_2} + \frac{s_\theta}{2\eta_1}}{\sqrt{\frac{c_\theta}{2\eta_1} + \frac{s_\theta}{2\eta_2}}}\right) S(r_3)|0\rangle$$

$$(3.21)$$

where $e^{2r_3} = \frac{c_\theta}{2\eta_1} + \frac{s_\theta}{2\eta_2}$. This is a superposition of displaced, equally squeezed states with phases between the teeth. If a Pauli eigenstate is desired, then $s_1\alpha_1|c_\theta| = s_2\alpha_2|s_\theta|$ may be desirable. As such, differences in the lattice spacing ($\alpha_1 \neq \alpha_2$) may be compensated for by tuning the beamsplitter angle. Furthermore, differences in squeezing may only result in a state with a level of overall squeezing (as well as an overall displacement).

Consider that $s_1\alpha_1|c_\theta| = ns_2\alpha_2|s_\theta|$ or $ns_1\alpha_1|c_\theta| = s_2\alpha_2|s_\theta|$ for some integer $n$. In particular, consider $n = 2$ and $s_1\alpha_1|c_\theta| = ns_2\alpha_2|s_\theta|$. Suppose further that all $C_{s2}$ are approximately the same value for even $s_2$, and for odd $s_2$, the values of $C_{s2}$ are all approximately equal to some other constant. The resulting state will be a magic state in the XZ great circle of the Bloch sphere, where the entire GKP codespace is stabilized by position shifts by $\alpha_1 c_\theta$.

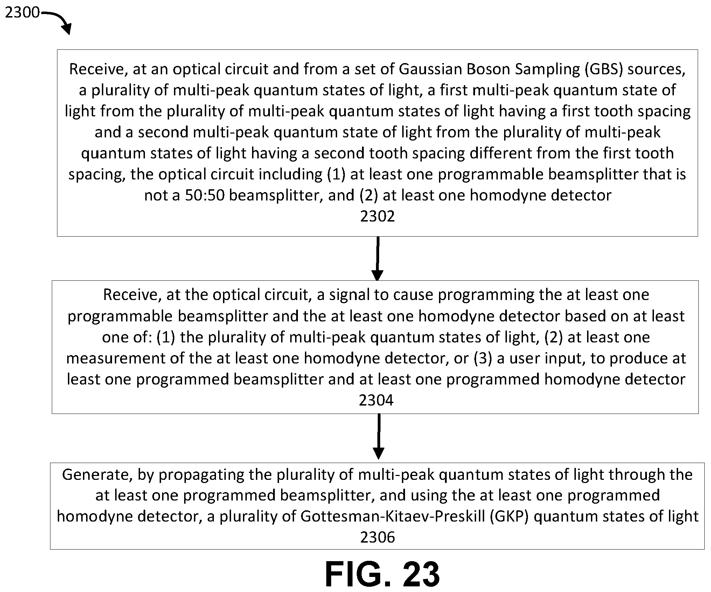

FIG. 23 is a diagram showing a third method for generating a plurality of Gottesman-Kitaev-Preskill (GKP) quantum states of light, according to some embodiments. As shown in FIG. 23, the method 2300 includes receiving, at 2302, at an optical circuit and from a plurality of Gaussian Boson Sampling (GBS) sources in at least one of optical communication with the optical circuit, a plurality of multi-peak quantum states of light. A first multi-peak quantum state of light from the plurality of multi-peak quantum states of light has a first tooth spacing, and a second multi-peak quantum state of light from the plurality of multi-peak quantum states of light has a second tooth spacing different from the first tooth spacing. The optical circuit includes (1) at least one programmable beamsplitter that is not a 50:50 beamsplitter, and (2) at least one homodyne detector. The method 2300 also includes receiving, at 2304, at the optical circuit, a signal to cause programming the at least one programmable beamsplitter and the at least one homodyne detector based on at least one measurement of the at least one homodyne detector to produce at least one programmed beamsplitter and at least one programmed homodyne detector. The method 2300 also includes generating a plurality of GKP quantum states of light, at 2306, by propagating the plurality of multi-peak quantum states of light through the at least one programmed beamsplitter, and using the at least one programmed homodyne detector.

In some implementations, the first multi-peak quantum state of light has a first tooth width and the second multi-peak quantum state of light has a second tooth width different from the first tooth width. Alternatively or in addition, the generating the plurality of GKP quantum states of light can include adaptively tuning the at least one programmed beamsplitter based on at least one of the first tooth spacing or the second tooth spacing. Alternatively or in addition, the adaptive tuning of the at least one programmed beamsplitter is not based on a tooth width of the first multi-peak quantum state of light and is not based on a tooth width of the second multi-peak quantum state of light. Alternatively or in addition, the method 2300 also includes tuning the at least one programmed beamsplitter to adjust a lattice spacing associated with the plurality of GKP quantum states of light.

## Varying the beamsplitter angles in the breeding circuit

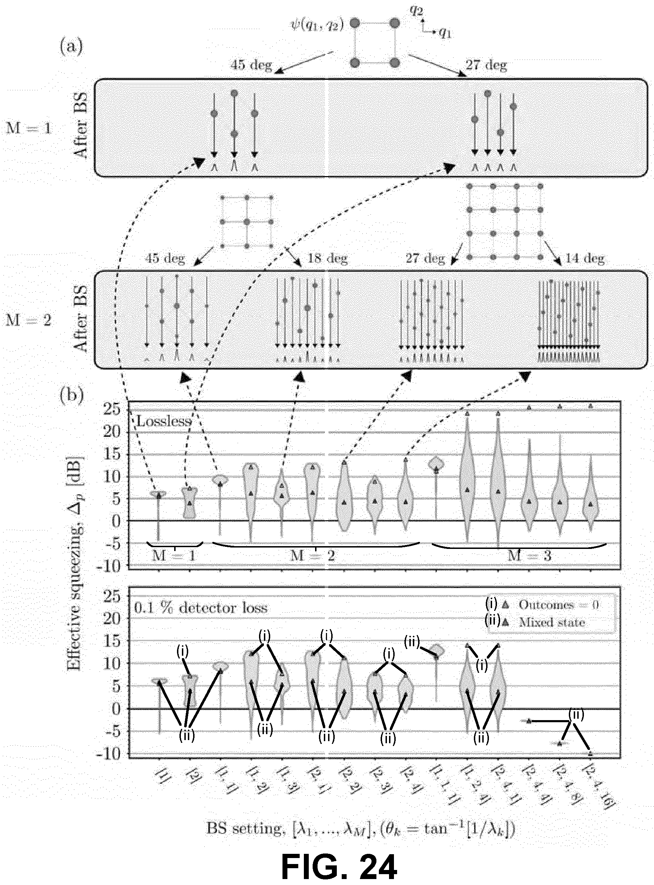

As can be gleaned from FIG. 24, there are scenarios in which one might consider using beamsplitter angles different from 50:50. In other words, there may be different beamsplitter angles that still produce output states with an equidistant peak spacing. This is illustrated in FIG. 24 at inset (a) for the $q$-quadrature wavefunction. The beamsplitter angle $\theta$ is related to the transmittance $t$ as $t = \cos(\theta)$. As can be seen in FIG. 24 at inset (a), there are at least two different beamsplitter angles that might be considered at the first step of the breeding protocol, outputting states of 3 or 4 peaks respectively. The relative phases between the peaks depend on the homodyne measurement outcome and to obtain good effective squeezing in the $p$-quadrature, the phase should be constant or linear across the peaks.

At $M = 2$ there are a few more candidate beamsplitter choices. In general, one may obtain an equispaced array of peaks in the $q$-quadrature whenever $\theta = \tan^{-1}(1/\lambda)$ for integer $\lambda$ smaller than or equal to the number of peaks in the input state. $\lambda = 1$ corresponds the 50:50 beamsplitter of the standard setup. Choosing different beamsplitter angles can produce states with much larger numbers of peaks for the same $M$. For example, at $M = 2$ the standard protocol produces 5 peaks, while the angles optimizing the number of peaks can produce 16 peaks. In general, the standard breeding protocol produces $2^M + 1$ peaks while different beamsplitter settings can yield up to $2^{2M}$ peaks.

When using different beamsplitter angles, the distance between the $q$-quadrature peaks shrinks more quickly compared to the 50:50 case. To compensate for this, the initial input cat space may be selected to have a correspondingly larger amplitude. This is similar to how circuits with larger $M$ require larger input cat state amplitudes.

FIG. 24 at inset (b) shows Monte Carlo simulation results with various different beamsplitter settings, tuning the input cat state amplitude for each setting to output the same GKP qunaught state. Several observations can be made with reference to FIG. 24. First, using 50:50 beamsplitters the variance of the results is much smaller than any of the more general settings. Furthermore, for each $M$ the average state is best when the using the standard 50:50 beamsplitters. Using other beamsplitter angles, however, facilitates the possibility of much higher squeezing for some measurement outcomes. In particular, the settings to maximize the number of peaks can yield very high squeezing levels for their best-case measurement outcomes. Contrary to the standard setting, these best-case measurement outcomes generally coincide with post-selection on 0. Taking advantage of different beamsplitter settings thus may involve some degree of post-selection.

When including a small amount of detector loss, the "greedy" approaches targeting many peaks are heavily punished. Meanwhile, some of the non-standard settings which target an intermediate number of peaks can still produce more squeezing compared to the standard setup in the best-case scenarios. These settings could therefore be relevant for generating high-quality states using smaller depth circuits, at the cost of post-selection.

FIG. 24 at inset (a) illustrates how the two-mode $q$-quadrature wavefunction evolves using different beamsplitter angles. Each circle denotes a Gaussian peak of the two-mode wavefunction and the size of each dot denote its relative amplitude. FIG. 24 at inset (b) shows Monte Carlo simulations with different combinations of beamsplitter settings. The settings are labeled by a set of $M$ integers $[\lambda_1, \ldots, \lambda_M]$, each of which relates to the beamsplitter angle used at each layer of the breeding protocol through $\theta_k = \tan^{-1}(1/\lambda_k)$. Some of the settings correspond to examples given in (a), as indicated by the dashed arrows. The amplitude of the input cat state for each setting is chosen individually to output the same GKP qunaught state. The lower panel shows the result in the presence of 0.1% loss at each homodyne detector.

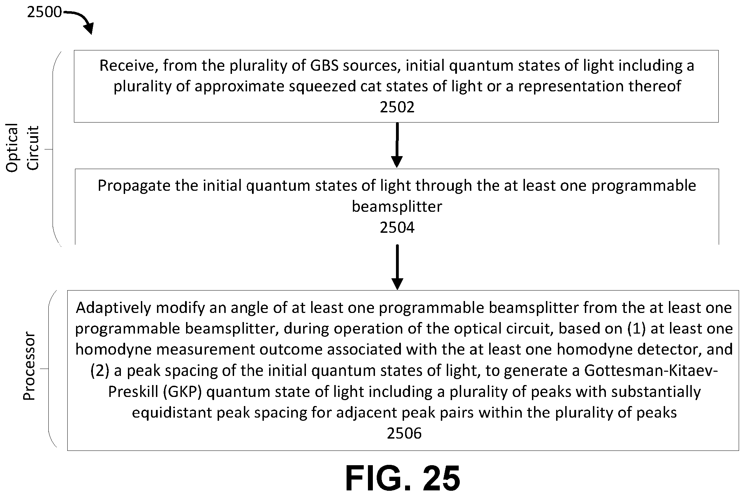

In some embodiments, a system for generating a plurality of GKP quantum states of light includes a plurality of Gaussian Boson Sampling (GBS) sources, an optical circuit in at least one of optical communication or electrical communication with the plurality of GBS sources, and a processor. The optical circuit can include at least one programmable beamsplitter and at least one homodyne detector. Such a system can be configured to implement a method, e.g., the method 2600 shown in FIG. 25, in which, at 2602, the optical circuit receives, from the plurality of GBS sources, initial quantum states of light including a plurality of approximate squeezed cat states of light or a representation thereof. At 2604, the initial quantum states of light are propagated through the at least one programmable beamsplitter. At 2606, the processor adaptively modifies an angle of at least one programmable beamsplitter from the at least one programmable beamsplitter, during operation of the optical circuit, based on (1) at least one homodyne measurement outcome associated with the at least one homodyne detector, and (2) a peak spacing of the initial quantum states of light, to generate a Gottesman-Kitaev-Preskill (GKP) quantum state of light including a plurality of peaks with substantially equidistant peak spacing for adjacent peak pairs within the plurality of peaks.

In some implementations, the initial quantum states of light further include at least one of: a plurality of single-peak squeezed states of light, or a plurality of states of light having at least 3 associated peaks. Alternatively or in addition, the processor can be configured to adaptively modify a peak spacing of the initial quantum states of light during operation of the optical circuit and based on the at least one homodyne measurement outcome. Alternatively or in addition, the plurality of peaks can have one of a constant phase or a linear phase. Alternatively or in addition, the at least one programmable beamsplitter is programmable into a plurality of modes that includes a breeding mode, an amplification mode, and a squeezing mode.

Also, various concepts may be embodied as one or more methods, of which an example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively.

**Claims**

1. A method, comprising:

   receiving, at an optical circuit and from a plurality of sources in optical communication with the optical circuit, initial quantum states of light including at least one of a plurality of approximate squeezed cat states of light or a plurality of approximate states of light having at least 3 associated peaks, the optical circuit including at least one programmable beamsplitter and at least one homodyne detector;
   receiving, at the optical circuit, a signal to cause programming of the at least one programmable beamsplitter based on at least one measurement of the at least one homodyne detector, to produce at least one programmed beamsplitter; and
   generating, by propagating the initial quantum states of light through the at least one programmed beamsplitter and using the at least one homodyne detector, a plurality of Gottesman-Kitaev-Preskill (GKP) quantum states of light.

2. The method of claim 1, wherein the initial quantum states of light further include a plurality of squeezed states of light.

3. The method of claim 1 or claim 2, wherein the plurality of sources includes a plurality of Gaussian Boson Sampling (GBS) sources.

4. The method of any of the preceding claims, wherein the generating the plurality of GKP quantum states of light includes M rounds of refinement of the initial quantum states of light, where M > 1.

5. The method of any of the preceding claims, wherein the initial quantum states of light include the plurality of approximate squeezed cat states of light, each approximate squeezed cat state of light from the plurality of approximate squeezed cat states of light being identical to each remaining approximate squeezed cat state of light from the plurality of approximate squeezed cat states of light.

6. The method of any of the preceding claims, wherein the optical circuit is further in electrical communication with the plurality of sources, and the optical circuit is configured to receive a representation of the initial quantum states of light.

7. The method of any of the preceding claims, wherein the generating the plurality of GKP quantum states of light is based on sampled homodyne outcomes at intermediate modes of the optical circuit during operation of the optical circuit.

8. The method of any of the preceding claims, wherein the at least one programmed beamsplitter includes a beamsplitter that is configured to operate as an optical switch.

9. The method of any of the preceding claims, wherein each quantum state of light in the initial quantum states of light has an associated peak spacing, and the signal is further based on at least one associated peak spacing.

10. The method of any of the preceding claims, wherein the signal is configured to cause the programming of the at least one programmable beamsplitter further based on at least one of the initial quantum states of light or a user input.

11. The method of any of the preceding claims, wherein the signal further causes programming of the at least one homodyne detector.

**12.** A system, comprising:

a plurality of sources; and
an optical circuit in optical communication with the plurality of sources, the optical circuit including at least one programmable beamsplitter and at least one homodyne detector, the optical circuit configured to:

receive, from the plurality of sources, initial quantum states of light generated by the plurality of sources, the initial quantum states of light including at least one of a plurality of approximate squeezed cat states of light or a plurality of approximate states of light having at least 3 associated peaks,
receive a signal to cause programming of the at least one programmable beamsplitter based on at least one measurement of the at least one homodyne detector, to produce at least one programmed beamsplitter, and generate a plurality of Gottesman-Kitaev-Preskill (GKP) quantum states of light by propagating the initial quantum states of light through the at least one programmed beamsplitter, and using the at least one homodyne detector.

**13.** The system of claim 12, wherein the initial quantum states of light further include a plurality of squeezed states of light.

**14.** The system of claim 12 or claim 13, wherein the plurality of sources includes a plurality of Gaussian Boson Sampling (GBS) sources.

**15.** The system of any of claims 12 to 14, wherein the optical circuit is configured to generate the plurality of GKP quantum states of light by applying M rounds of refinement to the initial quantum states of light, where M > 1.

**16.** The system of any of claims 12 to 15, wherein the initial quantum states of light include the plurality of approximate states of light having at least 3 associated peaks, and each approximate state of light having at least 3 associated peaks from the plurality of approximate states of light having at least 3 associated peaks is a directly-generated superposition of at least three squeezed states of light.

**17.** The system of claim 16, wherein each approximate state of light having at least 3 associated peaks is a symmetric superposition of the at least three squeezed states of light for that approximate state of light having at least 3 associated peaks.

**18.** The system of any of claims 12 to 17, wherein the optical circuit is further configured to adaptively modify a peak spacing of the initial quantum states of light during operation of the optical circuit and based on at least one homodyne measurement.

**19.** The system of any of claims 12 to 18, wherein the at least one programmable beamsplitter is programmable into a plurality of modes that includes a breeding mode, an amplification mode, and a squeezing mode.

**Patentansprüche**

**1.** Verfahren, umfassend:

Empfangen, in einer optischen Schaltung und von einer Vielzahl von Quellen in einer optischen Kommunikation mit der optischen Schaltung, von anfänglichen Quantenzuständen eines Lichts, die mindestens einen aus einer Vielzahl von angenäherten gequetschten Katzenzuständen des Lichts oder einer Vielzahl von angenäherten Lichtzuständen beinhalten, die mindestens 3 zugehörige Spitzen aufweisen, wobei die optische Schaltung mindestens einen programmierbaren Strahlteiler und mindestens einen homodynen Detektor beinhaltet;
Empfangen, in der optischen Schaltung, eines Signals, das, basierend auf mindestens einer Messung des mindestens einen homodynen Detektors, ein Programmieren des mindestens einen programmierbaren Strahlteilers veranlasst, um mindestens einen programmierten Strahlteiler zu produzieren; und
Erzeugen, indem die anfänglichen Quantenzustände des Lichts durch den mindestens einen programmierten Strahlteiler verbreitet werden und indem der mindestens eine homodyne Detektor verwendet wird, einer Vielzahl von Gottesman-Kitaev-Preskill-Quantenzuständen (GKP-Quantenzuständen) des Lichts.

**2.** Verfahren nach Anspruch 1, wobei die anfänglichen Quantenzustände des Lichts ferner eine Vielzahl von gequetschten Lichtzuständen beinhalten.

3. Verfahren nach Anspruch 1 oder Anspruch 2, wobei die Vielzahl von Quellen eine Vielzahl von Gaussian-Boson-Sampling-Quellen (GBS-Quellen) beinhalten.

4. Verfahrens nach einem der vorhergehenden Ansprüche, wobei das Erzeugen der Vielzahl von GKP-Quantenzuständen des Lichts M Verfeinerungsrunden der anfänglichen Quantenzustände des Lichts beinhaltet, wobei M > 1 ist.

5. Verfahren nach einem der vorhergehenden Ansprüche, wobei die anfänglichen Quantenzustände des Lichts die Vielzahl von angenäherten gequetschten Katzenzuständen des Lichts beinhalten, wobei jeder angenäherte gequetschte Katzenzustand des Lichts aus der Vielzahl von angenäherten gequetschten Katzenzuständen des Lichts mit jedem verbliebenen angenäherten gequetschten Katzenzustand des Lichts aus der Vielzahl von angenäherten gequetschten Katzenzuständen des Lichts identisch ist.

6. Verfahren nach einem der vorhergehenden Ansprüche, wobei die optische Schaltung ferner mit der Vielzahl von Quellen in einer elektrischen Kommunikation steht und wobei die optische Schaltung konfiguriert ist zum Empfangen einer Repräsentation der anfänglichen Quantenzustände des Lichts.

7. Verfahren nach einem der vorhergehenden Ansprüche, wobei das Erzeugen der Vielzahl von GKP-Quantenzuständen des Lichts auf abgetasteten homodynen Ergebnissen bei Zwischenmodi der optischen Schaltung während eines Betriebs der optischen Schaltung beruht.

8. Verfahren nach einem der vorhergehenden Ansprüche, wobei der mindestens eine programmierte Strahlteiler einen Strahlteiler beinhaltet, der konfiguriert ist, um als ein optischer Schalter betrieben zu werden.

9. Verfahren nach einem der vorhergehenden Ansprüche, wobei jeder Quantenzustand des Lichts bei den anfänglichen Quantenzuständen des Lichts einen zugehörigen Spitzenabstand aufweist und wobei das Signal ferner auf mindestens einem zugehörigen Spitzenabstand beruht.

10. Verfahren nach einem der vorhergehenden Ansprüche, wobei das Signal konfiguriert ist, um das Programmieren des mindestens einen programmierbaren Strahlteilers ferner basierend auf dem mindestens einen der anfänglichen Quantenzustände des Lichts oder einer Benutzereingabe zu veranlassen.

11. Verfahren nach einem der vorhergehenden Ansprüche, wobei das Signal ferner ein Programmieren des mindestens einen homodynen Detektors veranlasst.

12. System, umfassend:

eine Vielzahl von Quellen; und
eine optische Schaltung in einer optischen Kommunikation mit der Vielzahl von Quellen, wobei die optische Schaltung mindestens einen programmierbaren Strahlteiler und mindestens einen homodynen Detektor beinhaltet, wobei die optische Schaltung konfiguriert ist zum Empfangen, von der Vielzahl von Quellen, von anfänglichen Quantenzuständen eines Lichts, die von der Vielzahl von Quellen erzeugt werden, wobei die anfänglichen Quantenzustände des Lichts mindestens eine aus einer Vielzahl von angenäherten gequetschten Katzenzuständen des Lichts oder einer Vielzahl von angenäherten Lichtzuständen beinhalten, die mindestens 3 zugehörige Spitzen aufweisen,
Empfangen eines Signals, das, basierend auf mindestens einer Messung des mindestens einen homodynen Detektors, ein Programmieren des mindestens einen programmierbaren Strahlteilers veranlasst, um mindestens einen programmierten Strahlteiler zu produzieren; und
Erzeugen einer Vielzahl von Gottesman-Kitaev-Preskill-Quantenzuständen (GKP-Quantenzuständen) des Lichts, indem die anfänglichen Quantenzustände des Lichts durch den mindestens einen programmierten Strahlteiler verbreitet werden und indem der mindestens eine homodyne Detektor verwendet wird.

13. System nach Anspruch 12, wobei die anfänglichen Quantenzustände des Lichts ferner eine Vielzahl von gequetschten Lichtzuständen beinhalten.

14. System nach Anspruch 12 oder Anspruch 13, wobei die Vielzahl von Quellen eine Vielzahl von Gaussian-Boson-Sampling-Quellen (GBS-Quellen) beinhalten.

15. System nach einem der Ansprüche 12 bis 14, wobei die optische Schaltung konfiguriert ist zum Erzeugen der Vielzahl von GKP-Quantenzuständen des Lichts, indem M Verfeinerungsrunden der anfänglichen Quantenzustände des Lichts angewandt werden, wobei M > 1 ist.

16. System nach einem der Ansprüche 12 bis 15, wobei die anfänglichen Quantenzustände des Lichts die Vielzahl von angenäherten Lichtzuständen beinhalten, die mindestens 3 zugehörige Spitzen aufweisen, und wobei jeder angenäherte Lichtzustand, der mindestens 3 zugehörige Spitzen aufweist, aus der Vielzahl von angenäherten Lichtzuständen, die mindestens 3 zugehörige Spitzen aufweisen, eine direkt erzeugte Überlagerung von mindestens drei gequetschten Lichtzuständen ist.

17. System nach Anspruch 16, wobei jeder angenäherte Lichtzustand, der mindestens 3 zugehörige Spitzen aufweist, eine symmetrische Überlagerung der mindestens drei gequetschten Lichtzustände für diesen angenäherten Lichtzustand ist, der mindestens 3 zugehörige Spitzen aufweist.

18. System nach einem der Ansprüche 12 bis 17, wobei die optische Schaltung ferner konfiguriert ist, um einen Spitzenabstand der anfänglichen Quantenzustände des Lichts während eines Betriebs der optischen Schaltung und basierend auf mindestens einer homodynen Messung adaptiv zu modifizieren.

19. System nach einem der Ansprüche 12 bis 18, wobei der mindestens eine programmierbare Strahlteiler in eine Vielzahl von Modi programmierbar ist, die einen Zuchtmodus, einen Verstärkungsmodus und einen Quetschmodus beinhalten.

**Revendications**

1. Procédé, comprenant :

la réception, au niveau d'un circuit optique et en provenance d'une pluralité de sources en communication optique avec le circuit optique, d'états quantiques initiaux de la lumière incluant une pluralité d'états chats comprimés approchés de la lumière et/ou une pluralité d'états approchés de la lumière ayant au moins 3 pics associés, le circuit optique comportant au moins un séparateur de faisceau programmable et au moins un détecteur homodyne ;
la réception, au niveau du circuit optique, d'un signal pour induire la programmation de l'au moins un séparateur de faisceau programmable sur la base d'au moins une mesure de l'au moins un détecteur homodyne, afin de produire au moins un séparateur de faisceau programmé ; et
la génération, par propagation des états quantiques initiaux de la lumière à travers l'au moins un séparateur de faisceau programmé et utilisation de l'au moins un détecteur homodyne, d'une pluralité d'états quantiques de Gottesman-Kitaev-Preskill (GKP) de la lumière.

2. Procédé de la revendication 1, dans lequel les états quantiques initiaux de la lumière incluent en outre une pluralité d'états comprimés de la lumière.

3. Procédé de la revendication 1 ou la revendication 2, dans lequel la pluralité de sources inclut une pluralité de sources d'échantillonnage de boson gaussien (GBS).

4. Procédé de l'une quelconque des revendications précédentes, dans lequel la génération de la pluralité d'états quantiques GKP de la lumière comporte M cycles d'affinement des états quantiques initiaux de la lumière, où M > 1.

5. Procédé de l'une quelconque des revendications précédentes, dans lequel les états quantiques initiaux de la lumière incluent la pluralité d'états chats comprimés approchés de la lumière, chaque état chat comprimé approché de la lumière de la pluralité d'états chats comprimés approchés de la lumière étant identique à chaque état chat comprimé approché de la lumière restant de la pluralité d'états chats comprimés approchés de la lumière.

6. Procédé de l'une quelconque des revendications précédentes, dans lequel le circuit optique est en outre en communication électrique avec la pluralité de sources, et le circuit optique est conçu pour recevoir une représentation des états quantiques initiaux de la lumière.

7. Procédé de l'une quelconque des revendications précédentes, dans lequel la génération de la pluralité d'états quantiques GKP de la lumière est basée sur des résultats homodynes échantillonnés dans des modes intermédiaires du circuit optique pendant le fonctionnement du circuit optique.

8. Procédé de l'une quelconque des revendications précédentes, dans lequel l'au moins un séparateur de faisceau programmé comporte un séparateur de faisceau qui est conçu pour fonctionner comme un commutateur optique.

9. Procédé de l'une quelconque des revendications précédentes, dans lequel chaque état quantique de la lumière parmi les états quantiques initiaux de la lumière a un espacement entre pics associé, et le signal est en outre basé sur au moins un espacement entre pics associé.

10. Procédé de l'une quelconque des revendications précédentes, dans lequel le signal est conçu pour induire la programmation de l'au moins un séparateur de faisceau programmable également sur la base des états quantiques initiaux de la lumière et/ou d'une entrée utilisateur.

11. Procédé de l'une quelconque des revendications précédentes, dans lequel le signal induit en outre la programmation de l'au moins un détecteur homodyne.

12. Système, comprenant :

   une pluralité de sources ; et
   un circuit optique en communication optique avec la pluralité de sources, le circuit optique comportant au moins un séparateur de faisceau programmable et au moins un détecteur homodyne, le circuit optique étant conçu pour :

      recevoir, en provenance de la pluralité de sources, des états quantiques initiaux de la lumière générés par la pluralité de sources, les états quantiques initiaux de la lumière incluant une pluralité d'états chats comprimés approchés de la lumière et/ou une pluralité d'états approchés de la lumière ayant au moins 3 pics associés, recevoir un signal pour induire la programmation de l'au moins un séparateur de faisceau programmable sur la base d'au moins une mesure de l'au moins un détecteur homodyne, afin de produire au moins un séparateur de faisceau programmé, et
      générer une pluralité d'états quantiques de Gottesman-Kitaev-Preskill (GKP) de la lumière en propageant les états quantiques initiaux de la lumière à travers l'au moins un séparateur de faisceau programmé et en utilisant l'au moins un détecteur homodyne.

13. Système de la revendication 12, dans lequel les états quantiques initiaux de la lumière incluent en outre une pluralité d'états comprimés de la lumière.

14. Système de la revendication 12 ou la revendication 13, dans lequel la pluralité de sources inclut une pluralité de sources d'échantillonnage de boson gaussien (GBS).

15. Système de l'une quelconque des revendications 12 à 14, dans lequel le circuit optique est conçu pour générer la pluralité d'états quantiques GKP de la lumière en appliquant M cycles d'affinement aux états quantiques initiaux de la lumière, où M > 1.

16. Système de l'une quelconque des revendications 12 à 15, dans lequel les états quantiques initiaux de la lumière incluent la pluralité d'états approchés de la lumière ayant au moins 3 pics associés, et chaque état approché de la lumière ayant au moins 3 pics associés de la pluralité d'états approchés de la lumière ayant au moins 3 pics associés est une superposition générée directement d'au moins trois états comprimés de la lumière.

17. Système de la revendication 16, dans lequel chaque état approché de la lumière ayant au moins 3 pics associés est une superposition symétrique des au moins trois états comprimés de la lumière pour cet état approché de la lumière de la lumière ayant au moins 3 pics associés.

18. Système de l'une quelconque des revendications 12 à 17, dans lequel le circuit optique est en outre conçu pour modifier de manière adaptative un espacement entre pics des états quantiques initiaux de la lumière pendant le fonctionnement du circuit optique et sur la base d'au moins une mesure homodyne.

19. Système de l'une quelconque des revendications 12 à 18, dans lequel l'au moins un séparateur de faisceau programmable est programmable dans une pluralité de modes qui incluent un mode reproduction, un mode amplification et un mode compression.

FIG. 1

FIG. 2

**FIG. 3**

**FIG. 4**

EP 4 375 887 B1

**FIG. 5**

FIG. 6

FIG. 7

FIG. 8

EP 4 375 887 B1

M = 2

cat — State Preparation

p-Quadrature
Measurement

$R(\theta)$ Rotation $\sim \mathcal{N}(0, \sigma^2)$

50:50 Beamsplitter

**FIG. 9**

FIG. 10

FIG. 11

**FIG. 12**

**FIG. 13**

1400

Receive, at an optical circuit and from a set of sources, (1) initial quantum states of light including at least one of: a plurality of squeezed states of light, a plurality of approximate squeezed cat states of light, or a plurality of approximate states of light having at least 3 associated peaks, or (2) a representation of the initial quantum states of light, the optical circuit including at least one programmable beamsplitter and at least one homodyne detector
1402

Receive, at the optical circuit, a signal to cause programming of the at least one programmable beamsplitter and the at least one homodyne detector based on at least one of: (1) the initial quantum states of light, (2) at least one measurement of the at least one homodyne detector, or (3) a user input, to produce at least one programmed beamsplitter and at least one programmed homodyne detector
1404

Generate, by propagating the initial quantum states of light through the at least one programmed beamsplitter and using the at least one programmed homodyne detector, a plurality of Gottesman-Kitaev-Preskill (GKP) quantum states of light
1406

# FIG. 14

**FIG. 15**

FIG. 16

**FIG. 17**

**FIG. 18**

**FIG. 19**

**FIG. 20**

2100 ⟍

Receive, from the plurality of GBS sources, a plurality of multi-peak quantum states of light generated by the plurality of GBS sources
2102

Receive a signal to cause programming of the at least one programmable beamsplitter and the at least one homodyne detector based on (1) the plurality of multi-peak quantum states of light, (2) at least one measurement of the at least one homodyne detector, and (3) a user input, to produce at least one programmed beamsplitter and at least one programmed homodyne detector
2104

Generate a plurality of Gottesman-Kitaev-Preskill (GKP) quantum states of light by propagating the plurality of multi-peak quantum states of light through the at least one programmed beamsplitter , and using the at least one programmed homodyne detector
2106

# FIG. 21

EP 4 375 887 B1

Measuring $\hat{p}_2$ yields a superposition of peaks in $\hat{q}_1$ separated by $\gamma = \alpha \cos \theta = \beta \sin \theta$, with some phases between peaks depending on the value of $\hat{p}_2$.

FIG. 22

2300

Receive, at an optical circuit and from a set of Gaussian Boson Sampling (GBS) sources, a plurality of multi-peak quantum states of light, a first multi-peak quantum state of light from the plurality of multi-peak quantum states of light having a first tooth spacing and a second multi-peak quantum state of light from the plurality of multi-peak quantum states of light having a second tooth spacing different from the first tooth spacing, the optical circuit including (1) at least one programmable beamsplitter that is not a 50:50 beamsplitter, and (2) at least one homodyne detector
2302

Receive, at the optical circuit, a signal to cause programming the at least one programmable beamsplitter and the at least one homodyne detector based on at least one of: (1) the plurality of multi-peak quantum states of light, (2) at least one measurement of the at least one homodyne detector, or (3) a user input, to produce at least one programmed beamsplitter and at least one programmed homodyne detector
2304

Generate, by propagating the plurality of multi-peak quantum states of light through the at least one programmed beamsplitter, and using the at least one programmed homodyne detector, a plurality of Gottesman-Kitaev-Preskill (GKP) quantum states of light
2306

# FIG. 23

**FIG. 24**

2500

**Optical Circuit**

Receive, from the plurality of GBS sources, initial quantum states of light including a plurality of approximate squeezed cat states of light or a representation thereof
2502

Propagate the initial quantum states of light through the at least one programmable beamsplitter
2504

**Processor**

Adaptively modify an angle of at least one programmable beamsplitter from the at least one programmable beamsplitter, during operation of the optical circuit, based on (1) at least one homodyne measurement outcome associated with the at least one homodyne detector, and (2) a peak spacing of the initial quantum states of light, to generate a Gottesman-Kitaev-Preskill (GKP) quantum state of light including a plurality of peaks with substantially equidistant peak spacing for adjacent peak pairs within the plurality of peaks
2506

**FIG. 25**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J.E. BOURASSA et al.** Blueprint for a scalable photonic fault-tolerant quantum computer. *Quantum*, 2021, vol. 5, 392
- **I. TZITRIN et al.** Fault-tolerant quantum computation with static linear optics. *PRX Quantum*, 2021, vol. 2 (4), 040353
- **J. HASTRUP et al.** Generation of optical Gottesman-Kitaev-Preskil states with cavity QED. *ar-Xiv:2104.07981*, April 2021, http://arxiv.org/abs/2104.07981
- **J. ETESSE et al.** Experimental generation of squeezed cat states with an operation allowing iterative growth. *Physical review letters*, 2015, vol. 114 (19), 193602
- **D.V. SYCHEV et al.** Enlargement of optical Schrödinger's cat states. *Nature Photonics*, 2017, vol. 11 (6), 379-382